# EUROPEAN PATENT APPLICATION

(11) **EP 4 664 883 A1**
(43) Date of publication of application: **17.12.2025**
(21) Application number: 24769838.4
(22) Date of filing: 07.03.2024
(51) Int. Cl.: H04N 19/159, H04N 19/105, H04N 19/124

(54) **CODING METHOD, DECODING METHOD, AND ELECTRONIC DEVICE**

(30) Priority: 13.03.2023 CN 202310280913
(71) Applicant: Huawei Technologies Co., Ltd., Shenzhen, Guangdong 518129 (CN)
(72) Inventor: WANG, Danni, Shenzhen, Guangdong 518129 (CN); YANG, Haitao, Shenzhen, Guangdong 518129 (CN); LUO, Yi, Shenzhen, Guangdong 518129 (CN); FENG, Junkai, Shenzhen, Guangdong 518129 (CN)
(74) Representative: Pfenning, Meinig & Partner mbB
(86) International application number: PCT/CN2024/080496
(87) International publication number: WO 2024/188145

(57) **Abstract**

This application provides an encoding method, a decoding method, and an electronic device. The decoding method includes: obtaining, from a bitstream through entropy decoding, preset mode indication information of a current subblock and a first encoding code length corresponding to a predicted residual; obtaining a quantized predicted residual from the bitstream through entropy decoding based on the first encoding code length; determining, based on the preset mode indication information, whether to use a difference prediction mode to replace an intra prediction mode corresponding to a CU to which the current subblock belongs; if it is determined that the difference prediction mode is to be used to replace the intra prediction mode corresponding to the CU to which the current subblock belongs, performing difference prediction on the current subblock, to obtain a predicted value; determining a first quantization parameter based on a preset constraint manner of the first encoding code length; and dequantizing the quantized predicted residual based on the first quantization parameter, to obtain the predicted residual; or if it is determined that the difference prediction mode is not to be used to replace the intra prediction mode corresponding to the CU to which the current subblock belongs, performing intra prediction based on the intra prediction mode corresponding to the CU, to obtain a predicted value; and dequantizing the quantized predicted residual based on a second quantization parameter corresponding to the CU, to obtain the predicted residual of the current subblock; and adding the predicted residual and the predicted value, to obtain a reconstructed block. In this way, intra prediction accuracy can be improved.

## Description

This application claims priority to Chinese Patent Application No. 202310280913.2, filed with the China National Intellectual Property Administration on March 13, 2023 and entitled "ENCODING METHOD, DECODING METHOD, AND ELECTRONIC DEVICE", which is incorporated herein by reference in its entirety.

### TECHNICAL FIELD

Embodiments of this application relate to the encoding and decoding field, and in particular, to an encoding method, a decoding method, and an electronic device.

### BACKGROUND

An encoding process usually includes operations such as prediction, quantization, and entropy encoding. Prediction is usually performed to remove redundant information in an image or a video, so that compression is performed more easily. Therefore, improving prediction accuracy is one of manners of improving compression performance.

A coding unit may include subblocks with different content characteristics (for example, different texture directions). Prediction effect of some subblocks may be poor if a same intra prediction mode is used for all subblocks in the coding unit.

### SUMMARY

To resolve the foregoing technical problem, this application provides an encoding method, a decoding method, and an electronic device. The method can improve intra prediction accuracy, thereby improving compression performance.

According to a first aspect, an embodiment of this application provides a decoding method. The method includes: receiving a bitstream, and obtaining, from the bitstream through entropy decoding, preset mode indication information of a current subblock and a first encoding code length corresponding to a predicted residual of the current subblock; obtaining a quantized predicted residual of the current subblock from the bitstream through entropy decoding based on the first encoding code length; for the current subblock, determining, based on the preset mode indication information of the current subblock, whether to use a difference prediction mode to replace an intra prediction mode corresponding to a coding unit CU to which the current subblock belongs; if it is determined that the difference prediction mode is to be used to replace the intra prediction mode corresponding to the coding unit CU to which the current subblock belongs, performing difference prediction on the current subblock, to obtain a predicted value of the current subblock; determining a first quantization parameter based on a preset constraint manner of the first encoding code length; and dequantizing the quantized predicted residual based on the first quantization parameter, to obtain the predicted residual of the current subblock; or if it is determined that the difference prediction mode is not to be used to replace the intra prediction mode corresponding to the coding unit CU to which the current subblock belongs, performing intra prediction based on the intra prediction mode corresponding to the CU, to obtain a predicted value of the current subblock; and dequantizing the quantized predicted residual based on a second quantization parameter corresponding to the CU, to obtain the predicted residual of the current subblock; and adding the predicted residual of the current subblock and the predicted value of the current subblock, to obtain a reconstructed block of the current subblock.

That is, the difference prediction mode (also referred to as a DP prediction mode) is nested into any intra prediction mode (other than the difference prediction mode), and the preset mode indication information is added to indicate an intra prediction mode of each subblock. In this way, prediction flexibility of the coding unit can be increased, prediction at a finer granularity is implemented, prediction accuracy is improved, and compression performance is improved. In addition, DP prediction is performed based on an original value of an internal pixel (the pixel may also be referred to as a sample) of the subblock. Relevance between internal pixels in a same subblock is higher than relevance between pixels in different subblocks. Further, prediction accuracy can be further improved, and compression performance can be improved.

For example, the preset mode indication information indicates whether a prediction mode of the subblock is the DP prediction mode.

For example, reconstructed blocks of a plurality of subblocks may be stitched to obtain a reconstructed block of one CU.

For example, the preset mode indication information may be a newly added syntax element in this application.

For example, a second quantization parameter corresponding to a current CU may be determined based on complexity information of the current CU and a quantity of encoded bits of a previous CU.

For example, the quantity of encoded bits of the previous CU may be obtained in a process of performing entropy decoding on a bitstream of the previous CU. The complexity information of the current CU may be obtained from a bitstream of the current CU through entropy decoding.

For example, the complexity information may be a complexity level. For example, a complexity level of the current CU may be determined based on a texture complexity level of the current CU and an IBC (Intra block copy, intra block copy) complexity level of the current CU. For example, a smaller value in the texture complexity level of the current CU and the IBC complexity level of the current CU may be determined as the complexity level of the current CU.

For example, performing DP prediction on the current subblock, to obtain the predicted value of the current subblock may include: using, as the predicted value of the current subblock, a predicted difference value obtained from the bitstream through entropy decoding. The predicted difference value is determined by an encoder through DP prediction for the current subblock and written into the bitstream.

According to the first aspect, determining the first quantization parameter based on the preset constraint manner of the first encoding code length includes: when the preset constraint manner is a first constraint manner, determining the first quantization parameter based on a target encoding bit rate of the current subblock, a bit depth of an image to which the current subblock belongs, and a second encoding code length corresponding to the predicted value of the current subblock that are obtained from the bitstream through entropy decoding; or using the second quantization parameter as the first quantization parameter when the preset constraint manner is a second constraint manner; or when the preset constraint manner is a third constraint manner, determining a truncation range of the predicted residual of the current subblock, and determining the first quantization parameter based on the truncation range. In this way, the constraint manner of the first encoding code length may be flexibly set, to meet various scenario requirements.

According to any one of the first aspect or the implementations of the first aspect, the preset mode indication information includes first indication information and second indication information; and for the current subblock, determining, based on the preset mode indication information of the current subblock, whether to use the difference prediction mode to replace the intra prediction mode corresponding to the coding unit CU to which the current subblock belongs includes: determining, based on the first indication information, whether the CU includes a subblock whose prediction mode is the difference prediction mode; and when it is determined that the CU includes a subblock whose prediction mode is the difference prediction mode, for the current subblock, determining, based on the second indication information, whether to use the difference prediction mode to replace the intra prediction mode corresponding to the CU.

In this way, when intra prediction is performed on all subblocks included in the entire CU based on the intra prediction mode corresponding to the CU, only the first indication information of the CU needs to be written into the bitstream. That is, compared with a case in which the preset mode indication information includes only the second indication information, when the preset mode indication information includes the first indication information and the second indication information, a quantity of bits occupied by the preset mode indication information in the bitstream may be reduced, and bitstream overheads may be reduced.

According to any one of the first aspect or the implementations of the first aspect, another intra prediction mode is an intra block copy (Intra block copy, IBC) mode, and the preset mode indication information is a block vector BV. In this way, no additional information needs to be added to the bitstream, thereby reducing bit rate overheads.

According to a second aspect, an embodiment of this application provides an encoding method. The encoding method includes: obtaining a coding unit CU, and dividing the CU into a plurality of subblocks; for a current subblock, determining whether to use a difference prediction mode to replace an intra prediction mode corresponding to the CU; if it is determined that the difference prediction mode is to be used to replace the intra prediction mode corresponding to the CU, setting preset mode indication information of the current subblock to first preset information, and performing difference prediction, to determine a predicted value of the current subblock; determining a predicted residual between the predicted value of the current subblock and the current subblock; determining a first quantization parameter based on a preset constraint manner of a first encoding code length, where the first encoding code length corresponds to the predicted residual of the current subblock; quantizing the predicted residual of the current subblock based on the first quantization parameter; and performing entropy encoding on the quantized predicted residual of the current subblock, to obtain a bitstream of the current subblock; or if it is determined that the difference prediction mode is not to be used to replace the intra prediction mode corresponding to the CU, setting preset mode indication information of the current subblock to second preset information, and performing intra prediction corresponding to the CU, to determine a predicted value of the current subblock; determining a predicted residual between the predicted value of the current subblock and the current subblock; quantizing the predicted residual of the current subblock based on a second quantization parameter corresponding to the CU; and performing entropy encoding on the quantized predicted residual of the current subblock, to obtain a bitstream of the current subblock; and writing the preset mode indication information and the first encoding code length corresponding to the predicted residual of the current subblock into the bitstream.

For example, setting the preset mode indication information of the current subblock to the first preset information may include:

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The first preset information includes a first preset value and a second preset value, and setting the preset mode indication information of the current subblock to the first preset information includes: setting the second indication information to the first preset value, where the second indication information set to the first preset value indicates that the prediction mode of the current subblock is the DP prediction mode; and setting the first indication information to the second preset value, where the first indication information set to the second preset value indicates that the CU includes a subblock whose prediction mode is the DP prediction mode.

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The first preset information includes a first preset value and a second preset value, and setting the preset mode indication information of the current subblock to the first preset information includes: setting the second indication information to the first preset value, where the second indication information set to the first preset value indicates that the prediction mode of the current subblock is the DP prediction mode; determining irrelevance between pixels in the current subblock; and setting the first indication information to the second preset value when the second indication information is the first preset value and the irrelevance between the pixels in the current subblock is equal to a preset relevance value, where the first indication information set to the second preset value indicates that the CU includes a subblock whose prediction mode is the DP prediction mode.

In a possible manner, the preset mode indication information includes only the second indication information. In this way, setting the preset mode indication information of the current subblock to the first preset information may include: setting the second indication information of the current subblock to the first preset value.

For example, setting the preset mode indication information of the current subblock to the second preset information may include:

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The second preset information includes a third preset value and a fourth preset value, and setting the preset mode indication information of the current subblock to the second preset information includes: setting the second indication information to the third preset value, where the second indication information set to the third preset value indicates that the prediction mode of the current subblock is the intra prediction mode corresponding to the CU; and setting the first indication information to the fourth preset value, where the first indication information set to the fourth preset value indicates that the CU does not include a subblock whose prediction mode is the DP prediction mode.

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The second preset information includes a third preset value and a fourth preset value, and setting the preset mode indication information of the current subblock to the second preset information includes: setting the second indication information to the third preset value, where the second indication information set to the third preset value indicates that the prediction mode of the current subblock is the intra prediction mode corresponding to the CU; determining irrelevance between pixels in the current subblock; and setting the first indication information to the fourth preset value when the second indication information is the third preset value and/or the irrelevance between the pixels in the current subblock does not meet a preset irrelevance condition, where the first indication information set to the fourth preset value indicates that the CU does not include a subblock whose prediction mode is the DP prediction mode.

In a possible manner, the preset mode indication information includes only the second indication information. In this way, setting the preset mode indication information of the current subblock to the second preset information may include: setting the second indication information of the current subblock to the third preset value.

The first preset value, the second preset value, the third preset value, and the fourth preset value may be set based on a requirement. This is not limited in this application. It should be noted that the third preset value is different from the first preset value. For example, if the first preset value is 1, the third preset value may be 0. The fourth preset value is different from the second preset value. For example, if the second preset value is 1, the fourth preset value may be 0.

In this way, when intra prediction is performed on all subblocks included in the entire CU based on the intra prediction mode corresponding to the CU, if the preset mode indication information includes only the second indication information, second indication information of each subblock needs to be written into the bitstream; or if the preset mode indication information includes the first indication information and the second indication information, only the first indication information of the CU needs to be written into the bitstream. That is, compared with a case in which the preset mode indication information is the first indication information, when the preset mode indication information includes the first indication information and the second indication information, a quantity of bits occupied by the preset mode indication information in the bitstream may be reduced, and bitstream overheads may be reduced.

According to the second aspect, for the current subblock, when it is determined that the difference prediction mode is to be used to replace the intra prediction mode corresponding to the CU, the method further includes: truncating the predicted residual of the current subblock; and quantizing the predicted residual of the current subblock based on the first quantization parameter includes: quantizing a truncated predicted residual of the current subblock based on the first quantization parameter. In this way, a quantity of bits occupied by the prediction reference of the current subblock in the bitstream can be reduced, and bit rate overheads can be reduced.

According to any one of the second aspect or the implementations of the second aspect, truncating the predicted residual of the current subblock includes: determining a truncation range based on a target encoding bit rate of the current subblock, a bit depth of an image in which the current subblock is located, and a second encoding code length corresponding to the predicted value of the current subblock; and truncating the predicted residual of the current subblock based on the truncation range.

According to any one of the second aspect or the implementations of the second aspect, determining the first quantization parameter based on the preset constraint manner of the first encoding code length includes: when the preset constraint manner is a first constraint manner, determining the first quantization parameter based on the target encoding bit rate of the current subblock, the bit depth of the image to which the current subblock belongs, and the second encoding code length corresponding to the predicted value of the current subblock; or using the second quantization parameter as the first quantization parameter when the preset constraint manner is a second constraint manner; or when the preset constraint manner is a third constraint manner, determining the first quantization parameter based on the truncation range of the predicted residual of the current subblock.

According to any one of the second aspect or the implementations of the second aspect, the method further includes: writing the target encoding bit rate of the current subblock, the bit depth of the image in which the current subblock is located, and the second encoding code length corresponding to the predicted value of the current subblock into the bitstream of the current subblock. In this way, a decoder determines the first quantization parameter.

According to any one of the second aspect or the implementations of the second aspect, for the current subblock, determining whether to use the difference prediction mode to replace the intra prediction mode corresponding to the CU includes: determining flatness of the current subblock; and determining, based on the flatness of the current subblock, whether to use the difference prediction mode to replace the intra prediction mode corresponding to the CU.

According to any one of the second aspect or the implementations of the second aspect, determining the flatness of the current subblock includes: determining the flatness of the current subblock based on an original value of a pixel in the current subblock.

According to any one of the second aspect or the implementations of the second aspect, another intra prediction mode is an intra block copy IBC mode, and the preset mode indication information is a block vector BV.

A BV set to the first preset information indicates that a prediction mode of the current subblock is the difference prediction mode, a BV set to the second preset information indicates that a prediction mode of the current subblock is the IBC mode, the second preset information is a vector absolute value offset value between the current subblock and a reference block, and the reference block is determined through IBC prediction.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, this application provides a decoding method. The decoding method includes: receiving a bitstream; obtaining a block vector BV of a current subblock from the bitstream through entropy decoding, where a prediction mode of a coding unit CU to which the current subblock belongs is an intra block copy IBC mode; for the current subblock, determining, based on the BV of the current subblock, whether to use a difference prediction mode to replace the IBC mode; if it is determined, based on the BV of the current subblock, that the difference prediction mode is to be used to replace the IBC mode, using, as a predicted value of the current subblock, a predicted difference value obtained from the bitstream through entropy decoding; or if it is determined, based on the BV of the current subblock, that the difference prediction mode is not to be used to replace the IBC mode, performing IBC prediction on the current subblock based on the BV of the current subblock, to obtain a predicted value of the current subblock; and reconstructing the current subblock based on the predicted value of the current subblock, to obtain a reconstructed block of the current subblock.

That is, the BV may not only be a vector absolute value offset value between a subblock and a corresponding reference block, but also indicate that the prediction mode is the another intra prediction mode. For a CU (Coding Unit, coding unit) whose prediction mode is the IBC mode, the block vector BV is an existing syntax element in the bitstream. Therefore, in this application, nesting the DP prediction mode into the IBC mode neither increases a bit rate, nor increases a search area for IBC prediction. Coding unit prediction flexibility can be further increased, prediction at a finer granularity is implemented, prediction accuracy is improved, and compression performance is improved.

In addition, DP prediction is performed based on an original value of an internal pixel (the pixel may also be referred to as a sample) of the subblock. Relevance between internal pixels in a same subblock is higher than relevance between pixels in different subblocks. Further, prediction accuracy can be further improved, and compression performance can be improved.

According to a fourth aspect, this application provides an encoding method. The encoding method includes: obtaining a coding unit CU, and dividing the CU into a plurality of subblocks, where a prediction mode of the CU is an intra block copy IBC mode; for a current subblock, determining whether to use a difference prediction mode to replace the IBC mode; if it is determined that the difference prediction mode is to be used to replace the IBC mode, setting a BV of the current subblock to first preset information, and setting a predicted value of the current subblock to a first predicted value, where the BV set to the first preset information indicates that a prediction mode of the current subblock is the difference prediction mode, and the first predicted value is determined based on a predicted difference value determined through difference prediction; or if it is determined that the difference prediction mode is not to be used to replace the IBC mode, setting a block vector BV of the current subblock to second preset information, and setting a predicted value of the current subblock to a second predicted value, where the BV set to the second preset information indicates that a prediction mode of the current subblock is the IBC mode, the second preset information is a vector absolute value offset value between the current subblock and a reference block, and the reference block and the second predicted value are determined through IBC prediction; encoding the current subblock based on the predicted value of the current subblock, to obtain a bitstream of the current subblock; and writing the BV of the current subblock into the bitstream of the current subblock, and writing the predicted difference value into the bitstream when it is determined that the difference prediction mode is to be used to replace the IBC mode.

According to a fourth aspect, for the current subblock, determining whether to use the DP prediction mode to replace the IBC mode includes: determining flatness of the current subblock; and for the current subblock, determining, based on the flatness of the current subblock and the second preset information, whether to use the DP prediction mode to replace the IBC mode.

For example, for the current subblock, determining, based on the flatness of the current subblock and the second preset information, whether to use the DP prediction mode to replace the IBC mode includes: determining whether the second preset information is greater than a threshold and whether the flatness of the current subblock is equal to 0; and if the second preset information is greater than the threshold and the flatness of the current subblock is equal to 0, for the current subblock, determining to use the DP prediction mode to replace the IBC mode; or if the second preset information is less than or equal to the threshold and/or the flatness of the current subblock is not equal to 0, for the current subblock, determining not to use the DP prediction mode to replace the IBC mode.

According to any one of the fourth aspect or the implementations of the fourth aspect, determining the flatness of the current subblock includes: determining the flatness of the current subblock based on an original value of a pixel in the current subblock.

Any one of the fourth aspect and the implementations of the fourth aspect corresponds to any one of the third aspect and the implementations of the third aspect. For technical effect corresponding to any one of the fourth aspect and the implementations of the fourth aspect, refer to the technical effect corresponding to any one of the third aspect and the implementations of the third aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the decoding method according to any one of the first aspect or the possible implementations of the first aspect, and/or perform the decoding method according to any one of the third aspect or the possible implementations of the third aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to the technical effect corresponding to any one of the first aspect and the implementations of the first aspect. Details are not described herein again.

Any one of the fifth aspect and the implementations of the fifth aspect corresponds to any one of the third aspect and the implementations of the third aspect. For technical effect corresponding to any one of the fifth aspect and the implementations of the fifth aspect, refer to the technical effect corresponding to any one of the third aspect and the implementations of the third aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the decoding method according to any one of the second aspect or the possible implementations of the second aspect, and/or perform the encoding method according to any one of the fourth aspect or the possible implementations of the fourth aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to technical effect corresponding to any one of the second aspect and the implementations of the second aspect. Details are not described herein again.

Any one of the sixth aspect and the implementations of the sixth aspect corresponds to any one of the fourth aspect and the implementations of the fourth aspect. For technical effect corresponding to any one of the sixth aspect and the implementations of the sixth aspect, refer to technical effect corresponding to any one of the fourth aspect and the implementations of the fourth aspect. Details are not described herein again.

According to a seventh aspect, an embodiment of this application provides a chip, including one or more interface circuits and one or more processors. The one or more processors receive or send data through the one or more interface circuits. When the one or more processors execute computer instructions, the electronic device is enabled to perform the decoding method according to any one of the first aspect or the possible implementations of the first aspect, and/or perform the decoding method according to any one of the third aspect or the possible implementations of the third aspect.

Any one of the seventh aspect and the implementations of the seventh aspect corresponds to any one of the first aspect and the implementations of the first aspect. For technical effect corresponding to any one of the seventh aspect and the implementations of the seventh aspect, refer to the technical effect corresponding to any one of the first aspect and the implementations of the first aspect. Details are not described herein again.

Any one of the seventh aspect and the implementations of the seventh aspect corresponds to any one of the third aspect and the implementations of the third aspect. For technical effect corresponding to any one of the seventh aspect and the implementations of the seventh aspect, refer to the technical effect corresponding to any one of the third aspect and the implementations of the third aspect. Details are not described herein again.

According to an eighth aspect, an embodiment of this application provides a chip, including one or more interface circuits and one or more processors. The one or more processors receive or send data through the one or more interface circuits. When the one or more processors execute computer instructions, the electronic device is enabled to perform the decoding method according to any one of the second aspect or the possible implementations of the second aspect, and/or perform the encoding method according to any one of the fourth aspect or the possible implementations of the fourth aspect.

Any one of the eighth aspect and the implementations of the eighth aspect corresponds to any one of the second aspect and the implementations of the second aspect. For technical effect corresponding to any one of the eighth aspect and the implementations of the eighth aspect, refer to technical effect corresponding to any one of the second aspect and the implementations of the second aspect. Details are not described herein again.

Any one of the eighth aspect and the implementations of the eighth aspect corresponds to any one of the fourth aspect and the implementations of the fourth aspect. For technical effect corresponding to any one of the eighth aspect and the implementations of the eighth aspect, refer to technical effect corresponding to any one of the fourth aspect and the implementations of the fourth aspect. Details are not described herein again.

According to a ninth aspect, an embodiment of this application provides a computer-readable storage medium. The computer-readable storage medium stores a computer program, and when the computer program is run on a computer or a processor, the computer or the processor is enabled to perform the decoding method according to any one of the first aspect or the possible implementations of the first aspect, and/or perform the decoding method according to any one of the third aspect or the possible implementations of the third aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to the technical effect corresponding to any one of the first aspect and the implementations of the first aspect. Details are not described herein again.

Any one of the ninth aspect and the implementations of the ninth aspect corresponds to any one of the third aspect and the implementations of the third aspect. For technical effect corresponding to any one of the ninth aspect and the implementations of the ninth aspect, refer to the technical effect corresponding to any one of the third aspect and the implementations of the third aspect. Details are not described herein again.

According to a tenth aspect, an embodiment of this application provides a computer-readable storage medium. The computer-readable storage medium stores a computer program, and when the computer program is run on a computer or a processor, the computer or the processor is enabled to perform the decoding method according to any one of the second aspect or the possible implementations of the second aspect, and/or perform the encoding method according to any one of the fourth aspect or the possible implementations of the fourth aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to the technical effect corresponding to any one of the second aspect and the implementations of the second aspect. Details are not described herein again.

Any one of the tenth aspect and the implementations of the tenth aspect corresponds to any one of the fourth aspect and the implementations of the fourth aspect. For technical effect corresponding to any one of the tenth aspect and the implementations of the tenth aspect, refer to technical effect corresponding to any one of the fourth aspect and the implementations of the fourth aspect. Details are not described herein again.

According to an eleventh aspect, an embodiment of this application provides a computer program product. The computer program product includes computer instructions, and when the computer instructions are executed by a computer or a processor, the computer or the processor is enabled to perform the decoding method according to any one of the first aspect or the possible implementations of the first aspect, and/or perform the decoding method according to any one of the third aspect or the possible implementations of the third aspect.

Any one of the eleventh aspect and the implementations of the eleventh aspect corresponds to any one of the first aspect and the implementations of the first aspect. For technical effect corresponding to any one of the eleventh aspect and the implementations of the eleventh aspect, refer to the technical effect corresponding to any one of the first aspect and the implementations of the first aspect. Details are not described herein again.

Any one of the eleventh aspect and the implementations of the eleventh aspect corresponds to any one of the third aspect and the implementations of the third aspect. For technical effect corresponding to any one of the eleventh aspect and the implementations of the eleventh aspect, refer to the technical effect corresponding to any one of the third aspect and the implementations of the third aspect. Details are not described herein again.

According to a twelfth aspect, an embodiment of this application provides a computer program product. The computer program product includes computer instructions, and when the computer instructions are executed by a computer or a processor, the computer or the processor is enabled to perform the decoding method according to any one of the second aspect or the possible implementations of the second aspect, and/or perform the encoding method according to any one of the fourth aspect or the possible implementations of the fourth aspect.

Any one of the twelfth aspect and the implementations of the twelfth aspect corresponds to any one of the second aspect and the implementations of the second aspect. For technical effect corresponding to any one of the twelfth aspect and the implementations of the twelfth aspect, refer to the technical effect corresponding to any one of the second aspect and the implementations of the second aspect. Details are not described herein again.

Any one of the twelfth aspect and the implementations of the twelfth aspect corresponds to any one of the fourth aspect and the implementations of the fourth aspect. For technical effect corresponding to any one of the twelfth aspect and the implementations of the twelfth aspect, refer to technical effect corresponding to any one of the fourth aspect and the implementations of the fourth aspect. Details are not described herein again.

According to a thirteenth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to any one of the second aspect and the implementations of the second aspect, and/or is generated according to any one of the fourth aspect and the implementations of the fourth aspect.

Any one of the thirteenth aspect and the implementations of the thirteenth aspect corresponds to any one of the second aspect and the implementations of the second aspect. For technical effect corresponding to any one of the thirteenth aspect and the implementations of the thirteenth aspect, refer to the technical effect corresponding to any one of the second aspect and the implementations of the second aspect. Details are not described herein again.

Any one of the thirteenth aspect and the implementations of the thirteenth aspect corresponds to any one of the fourth aspect and the implementations of the fourth aspect. For technical effect corresponding to any one of the thirteenth aspect and the implementations of the thirteenth aspect, refer to technical effect corresponding to any one of the fourth aspect and the implementations of the fourth aspect. Details are not described herein again.

According to a fourteenth aspect, an embodiment of this application provides a bitstream transmission apparatus. The apparatus includes a transmitter and at least one storage medium. The at least one storage medium is configured to store a bitstream. The bitstream is generated according to any one of the second aspect and the implementations of the second aspect, and/or is generated according to any one of the fourth aspect and the implementations of the fourth aspect. The transmitter is configured to: obtain the bitstream from the storage medium, and send the bitstream to a device-side device through a transmission medium.

Any one of the fourteenth aspect and the implementations of the fourteenth aspect corresponds to any one of the second aspect and the implementations of the second aspect. For technical effect corresponding to any one of the fourteenth aspect and the implementations of the fourteenth aspect, refer to the technical effect corresponding to any one of the second aspect and the implementations of the second aspect. Details are not described herein again.

Any one of the fourteenth aspect and the implementations of the fourteenth aspect corresponds to any one of the fourth aspect and the implementations of the fourth aspect. For technical effect corresponding to any one of the fourteenth aspect and the implementations of the fourteenth aspect, refer to technical effect corresponding to any one of the fourth aspect and the implementations of the fourth aspect. Details are not described herein again.

According to a fifteenth aspect, an embodiment of this application provides a bitstream distribution system. The system includes: at least one storage medium, configured to store at least one bitstream, where the at least one bitstream is generated according to any one of the second aspect and the implementations of the second aspect, and/or is generated according to any one of the fourth aspect and the implementations of the fourth aspect; and a streaming media device, configured to: obtain a target bitstream from the at least one storage medium, and send the target bitstream to a device-side device. The streaming media device includes a content server or a content delivery server.

Any one of the fifteenth aspect and the implementations of the fifteenth aspect corresponds to any one of the second aspect and the implementations of the second aspect. For technical effect corresponding to any one of the fifteenth aspect and the implementations of the fifteenth aspect, refer to the technical effect corresponding to any one of the second aspect and the implementations of the second aspect. Details are not described herein again.

Any one of the fifteenth aspect and the implementations of the fifteenth aspect corresponds to any one of the fourth aspect and the implementations of the fourth aspect. For technical effect corresponding to any one of the fifteenth aspect and the implementations of the fifteenth aspect, refer to technical effect corresponding to any one of the fourth aspect and the implementations of the fourth aspect. Details are not described herein again.

### BRIEF DESCRIPTION OF DRAWINGS

FIG. 1a is a diagram of an example application scenario;
FIG. 1b is a diagram of a structure of an example encoder and an example decoder;
FIG. 2a is a diagram of an example encoding procedure;
FIG. 2b is a diagram of an example encoding process;
FIG. 3a is a diagram of an example decoding procedure;
FIG. 3b is a diagram of an example decoding process;
FIG. 4a is a diagram of an example encoding procedure;
FIG. 4b is a diagram of an example encoding process;
FIG. 4c is a diagram of an example search area for IBC prediction;
FIG. 5a is a diagram of an example decoding procedure;
FIG. 5b is a diagram of an example decoding process; and
FIG. 6 is a diagram of a structure of an example apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims of embodiments of this application, the terms such as "first" and "second" are intended to distinguish between different objects but do not indicate a particular order of the objects. For example, a first target object, a second target object, and the like are used to distinguish between different target objects, but do not indicate a particular order of the objects.

In embodiments of this application, the word such as "example" or "for example" represents giving an example, an illustration, or a description. Any embodiment or design solution described as an "example" or "for example" in embodiments of this application should not be explained as being more preferred or having more advantages than another embodiment or design solution. To be precise, use of the word such as "example" or "for example" is intended to present a relative concept in a specific manner.

In descriptions of embodiments of this application, unless otherwise specified, "a plurality of" means two or more. For example, a plurality of processing units are two or more processing units, and a plurality of systems are two or more systems.

An encoding and decoding method in this application may be applied to various video service scenarios such as a video conference scenario, a video telephone scenario, an online education scenario, a remote tutoring scenario, a low-latency live streaming scenario, a cloud game scenario, a wireless screen projection scenario, and a wireless extended screen scenario. This is not limited in embodiments of this application.

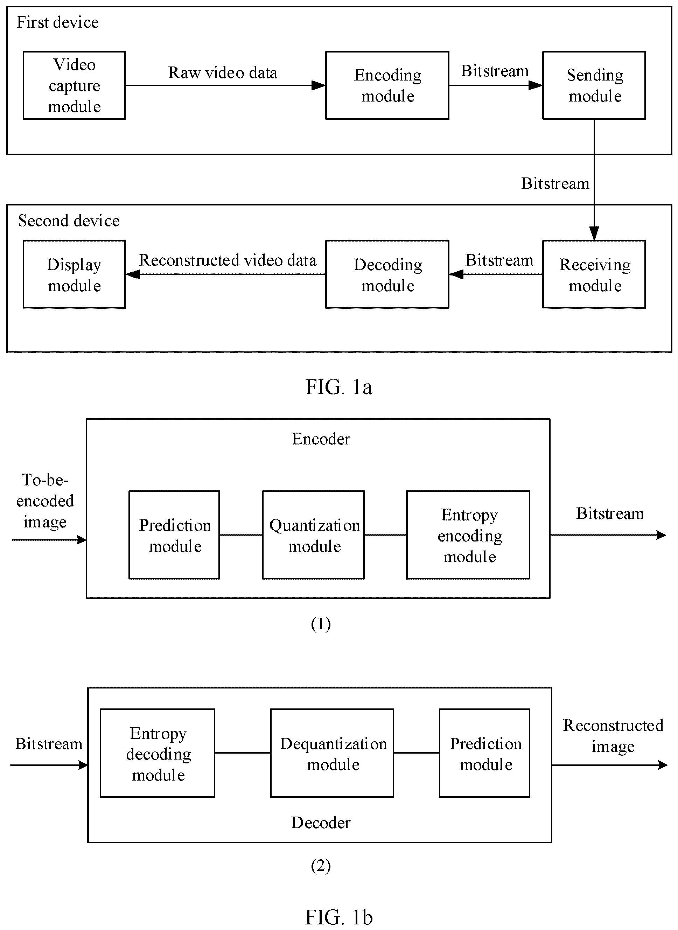

FIG. 1a is a diagram of an example application scenario.

As shown in FIG. 1a, for example, a first device may include a video capture module, an encoding module (or an encoder), and a sending module. For example, the encoding module may be a software module, or may be a hardware module. This is not limited in this embodiment of this application. It should be understood that FIG. 1a shows only an example of the first device. In some other embodiments of this application, the first device has more modules than those shown in FIG. 1a. This is not limited in this embodiment of this application.

As shown in FIG. 1a, for example, a second device may include a display module, a decoding module (or a decoder), and a receiving module. For example, the decoding module may be a software module, or may be a hardware module. This is not limited in this embodiment of this application. It should be understood that FIG. 1a shows only an example of the second device. In some other embodiments of this application, the second device has more modules than those shown in FIG. 1a. This is not limited in this embodiment of this application.

Still as shown in FIG. 1a, for example, after the video capture module of the first device collects raw video data, a process of sending the collected raw video data to the second device for display is as follows: The video capture module may output the collected raw video data to the encoding module. Next, the encoding module may encode the raw video data, to obtain a bitstream (the bitstream may also be referred to as a bitstream or a bitstream), and output the bitstream obtained through encoding to the sending module. Then, the sending module may send the bitstream to the second device. Subsequently, the receiving module of the second device may receive the bitstream, and then output the bitstream to the decoding module. Then, the decoding module may decode the bitstream, to obtain reconstructed video data, and output the reconstructed video data to the display module. The display module displays the reconstructed video data.

For example, the first device includes but is not limited to a server, a PC (Personal Computer, Personal Computer), a notebook computer, a tablet computer, a mobile phone, and a watch.

For example, the second device includes but is not limited to a PC, a notebook computer, a tablet computer, a mobile phone, and a watch.

For example, in a video conference scenario, the first device may be a PC or a laptop, and the second device may be a PC or a laptop.

For example, in an online education scenario, the first device may be a PC or a notebook computer, and the second device may be a tablet computer.

For example, in a cloud game scenario, the first device may be a server, and the second device may be a tablet computer, a PC, a laptop computer, or a mobile phone.

It should be understood that this application may be further applied to an image encoding and decoding scenario. This is not limited in this application.

FIG. 1b is a diagram of a structure of an example encoder and an example decoder.

As shown in (1) in FIG. 1b, for example, the encoder may include a prediction module, a quantization module, and an entropy encoding module. The prediction module may be configured to perform encoded prediction (for example, inter prediction and intra prediction). The quantization module may perform quantization based on a quantization parameter. The entropy encoding module may be configured to perform entropy encoding (for example, arithmetic coding or Huffman coding). For example, after a to-be-encoded image is input into the encoder, the encoder sequentially inputs the to-be-encoded image into the prediction module, the quantization module, and the entropy encoding module for processing, and outputs a bitstream.

It should be understood that the encoder in this application may include more modules than those shown in (1) in FIG. 1b. For example, the encoder may further include a bit rate control module (which adjusts an output bit rate by changing an encoding quantization parameter, an encoding mode, and the like). This is not limited in this application.

As shown in (2) in FIG. 1b, for example, the decoder may include a prediction module, a dequantization module, and an entropy decoding module. The entropy decoding module is configured to perform entropy decoding. The dequantization module is configured to perform dequantization based on a quantization parameter. The prediction module is configured to perform decoded prediction. For example, after a bitstream is input into the decoder, the bitstream is sequentially processed by the entropy decoding module, the dequantization module, and the prediction module, and a reconstructed image is output.

It should be understood that the decoder in this application may include more modules than that shown in (2) in FIG. 1b. For example, the decoder may further include a bit rate control module (configured to determine the quantization parameter). This is not limited in this application.

The following describes an encoding and decoding process (namely, an intra encoding process and an intra decoding process) by using an example in which the prediction module in (2) in FIG. 1b is used for intra prediction.

To resolve a problem in the conventional technology that different subblocks in a same coding unit are predicted in a same intra prediction mode and consequently, prediction effect of some subblocks is poor, this application provides an encoding and decoding method for a coding unit whose prediction mode is any intra prediction mode. One idea of the encoding and decoding methods is as follows: A difference prediction mode (also referred to as a DP prediction mode) is nested into any intra prediction mode (other than the difference prediction mode), and the preset mode indication information is added to indicate an intra prediction mode of each subblock. In this way, prediction flexibility of the coding unit can be increased, prediction at a finer granularity is implemented, prediction accuracy is improved, and compression performance is improved. In addition, DP prediction is performed based on an original value of an internal pixel (the pixel may also be referred to as a sample) of the subblock. Relevance between internal pixels in a same subblock is higher than relevance between pixels in different subblocks. Further, prediction accuracy can be further improved, and compression performance can be improved.

The following describes the encoding and decoding methods in this application by using an example in which an image is encoded and decoded.

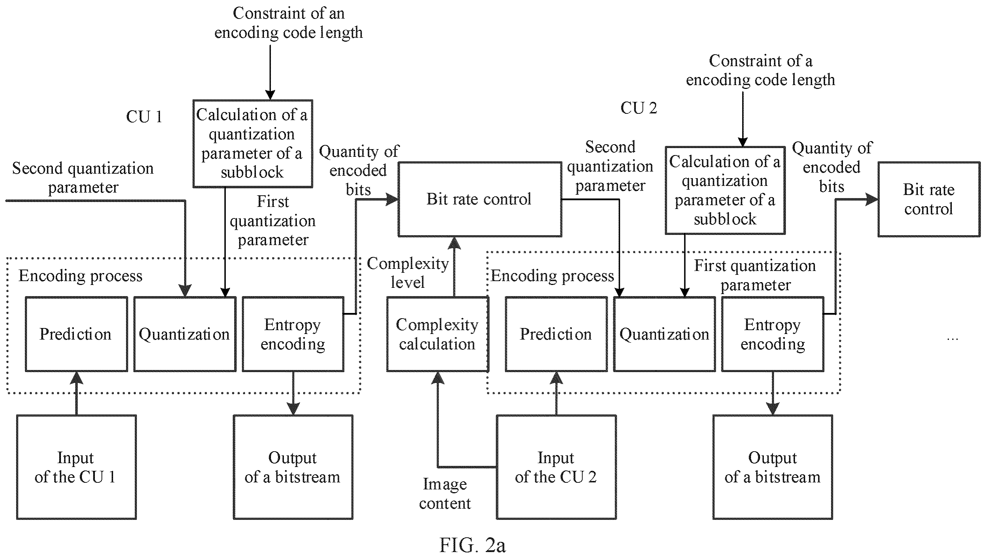

FIG. 2a is a diagram of an example encoding procedure.

As shown in FIG. 2a, for example, after a to-be-encoded image is input to an encoder, the encoder may divide the to-be-encoded image into a plurality of coding units (Coding Unit, CU) such as a CU 1, CU 2, .... Then, a bitstream of the CU 1 may be obtained by sequentially performing prediction, quantization, and entropy encoding operations on the CU 1; and a bitstream of the CU 2 may be obtained by sequentially performing prediction, quantization, and entropy encoding operations on the CU 2. By analogy, after encoding of all the CUs of the to-be-encoded image is completed, bitstreams of all the CUs are cascaded to obtain a bitstream of the to-be-encoded image.

For example, for each CU, the encoder may divide the CU into a plurality of subblocks, and may obtain a bitstream of each subblock after sequentially performing prediction, quantization, and entropy encoding operations on each subblock. After encoding of all the subblocks in the CU is completed, bitstreams of the subblocks are cascaded to obtain a bitstream of the CU.

In a process of performing encoding for each subblock in the CU, when a prediction mode of the subblock is a DP prediction mode, a first quantization parameter may be determined based on a constraint condition of an encoding code length (an encoding code length corresponding to a predicted residual of the subblock); and then quantization is performed based on the first quantization parameter. When the prediction mode of the subblock is an intra prediction mode corresponding to the CU, complexity information (for example, a complexity level) of a current CU may be first determined based on image content of the current CU. Then, bit rate control is performed based on a quantity of encoded bits of a previous CU and the complexity level of the current CU (that is, an output bit rate is adjusted by changing an encoding quantization parameter, an encoding mode, and the like through analysis of the quantity of encoded bits of the previous CU and the complexity level of the current CU), to obtain a second quantization parameter. Then, quantization may be performed based on the second quantization parameter determined through bit rate control. The encoder may further write the complexity information of the CU into the bitstream of the CU, so that a decoder obtains the complexity information of the CU from the bitstream, to determine the second quantization parameter required for dequantization.

In a process of performing encoding for the CU 1, for a subblock whose prediction mode is an intra prediction mode corresponding to the CU 1, the second quantization parameter is a preset quantization parameter.

The following describes an encoding process by using one CU as an example.

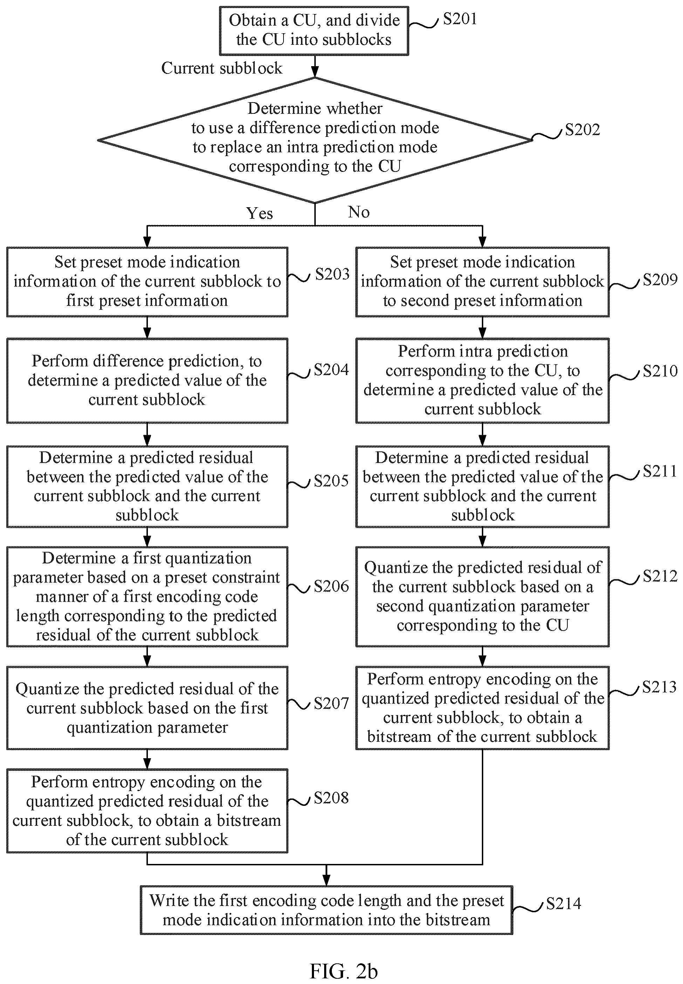

FIG. 2b is a diagram of an example encoding process.

S201: Obtain a coding unit CU, and divide the CU into a plurality of subblocks.

For example, in this application, an intra prediction mode corresponding to the obtained CU may be any intra prediction mode other than a DP prediction mode, for example, an intra block copy (Intra block copy, IBC) mode, a vertical prediction mode, an angle prediction mode, or a direct current (Direct Current, DC) prediction mode. This is not limited in this application.

For example, after obtaining the CU, an encoder may divide the CU into the plurality of subblocks. A quantity of subblocks and a size of the subblock are not limited in this application. For example, a decoder may divide the CU into a plurality of subblocks of a same size.

The following provides descriptions by using one subblock as an example.

S202: For a current subblock, determine whether to use a difference prediction mode to replace the intra prediction mode corresponding to the CU.

For example, flatness of the current subblock may be determined. Then, whether to use the DP prediction mode to replace the intra prediction mode corresponding to the CU may be determined based on the flatness of the current subblock.

For example, the flatness of the current subblock may be determined based on an original value of a pixel in the current subblock.

In a possible manner, a process of determining the flatness of the current subblock may be as follows: A difference between an original value of each pixel in the current subblock and an average of original values of all pixels in the current subblock may be calculated, to obtain a plurality of differences; and then absolute values of the plurality of differences are added, to obtain the flatness of the current subblock.

For example, a flatness threshold TH1 may be preset. TH1=X0*(1<<(BitDepth-8))×quantity of pixels included in a subblock, BitDepth is a bit depth of an image in which the current subblock is located, and X0 indicates a difference between original values of two adjacent pixels. X0 may be set based on a requirement. For example, X0=2. This is not limited in this application.

Then, the flatness of the current subblock may be compared with the flatness threshold TH1. When the flatness of the current subblock is less than the flatness threshold TH1, for the current subblock, it is determined that the DP prediction mode is not to be used to replace the intra prediction mode corresponding to the CU; or when the flatness of the current subblock is greater than or equal to the flatness threshold TH1, for the current subblock, it is determined that the DP prediction mode is to be used to replace the intra prediction mode corresponding to the CU.

For example, if it is determined, for the current subblock, that the DP prediction mode is to be used to replace the intra prediction mode corresponding to the CU, S203 to S208 may be performed; if it is determined, for the current subblock, that the DP prediction mode is not to be used to replace the intra prediction mode corresponding to the CU, S209 to S213 may be performed.

S203: Set preset mode indication information of the current subblock to first preset information.

For example, when it is determined that the DP prediction mode is to be used to replace the intra prediction mode corresponding to the CU, the preset mode indication information of the current subblock may be set to the first preset information.

The preset mode indication information indicates whether a prediction mode of the subblock is the DP prediction mode. The preset mode indication information set to the first preset information indicates that the prediction mode of the subblock is the DP prediction mode.

In a possible manner, the preset mode indication information includes first indication information and second indication information, the first indication information indicates whether the CU includes a subblock whose prediction mode is the DP prediction mode, and the second indication information indicates whether the prediction mode of the subblock is the DP prediction mode. The first preset information includes a first preset value and a second preset value, and setting the preset mode indication information of the current subblock to the first preset information may include: setting the second indication information to the first preset value, where the second indication information set to the first preset value indicates that the prediction mode of the current subblock is the DP prediction mode; and setting the first indication information to the second preset value, where the first indication information set to the second preset value indicates that the CU includes a subblock whose prediction mode is the DP prediction mode.

Both the first preset value and the second preset value may be set based on a requirement. This is not limited in this application. For example, the first preset value is 1, and the second preset value is 1.

In a possible manner, the preset mode indication information includes first indication information and second indication information, the first indication information indicates whether the CU includes a subblock whose prediction mode is the DP prediction mode, and the second indication information indicates whether the prediction mode of the subblock is the DP prediction mode. The first preset information includes a first preset value and a second preset value, and setting the preset mode indication information of the current subblock to the first preset information includes: setting the second indication information to the first preset value, where the second indication information set to the first preset value indicates that the prediction mode of the current subblock is the DP prediction mode; determining irrelevance between pixels in the current subblock; and setting the first indication information to the second preset value when the second indication information is the first preset value and the irrelevance between the pixels in the current subblock is equal to a preset relevance value, where the first indication information set to the second preset value indicates that the CU includes a subblock whose prediction mode is the DP prediction mode.

In a possible manner, a process of calculating irrelevance between pixels in the current subblock may be as follows:
First, vertical relevance RelevanV of the current subblock is calculated. Specifically, a difference between the original value of each pixel in the current subblock and a reconstructed value of a corresponding first reference pixel is calculated, to obtain a plurality of differences; and a sum of absolute values of the plurality of differences is used as vertical relevance RelevanV of the current subblock. The first reference pixel may be a pixel at a same horizontal coordinate (also referred to as a horizontal coordinate) in a previous row of the current subblock in a CU to which the current subblock belongs.

Next, horizontal relevance RelevanH of the current subblock is calculated. Specifically, a difference between the original value of each pixel in the current subblock and an original value of a corresponding second reference pixel is obtained, to obtain a plurality of differences; and a sum of absolute values of the plurality of differences is used as the horizontal relevance RelevanH of the current subblock. The second reference pixel may be a pixel at a same vertical coordinate (also referred to as a vertical coordinate) on a left side of the current subblock in a CU of the current subblock.

Then, irrelevance CompSbRelevant of the pixel in the current subblock is determined based on the vertical relevance RelevanV of the current subblock and the horizontal relevance RelevanH of the current subblock. In a possible manner, a smallest value of the vertical relevance RelevanV of the current subblock and the horizontal relevance RelevanH of the current subblock may be selected as the irrelevance CompSbRelevant of the pixel in the current subblock.

For example, if the irrelevance CompSbRelevant of the pixel in the current subblock is less than a relevance threshold TH2, the irrelevance CompSbRelevant of the pixel in the current subblock is set to 0. TH2=X1×(1<<(BitDepth-8))×quantity of pixels included in a subblock, and X1 indicates a difference between original values of two adjacent pixels, and may be set based on a requirement. For example, X1=4. This is not limited in this application. "0" may also be replaced with another value.

If the irrelevance CompSbRelevant of the pixel in the current subblock is greater than an irrelevance threshold TH3, the irrelevance CompSbRelevant of the pixel in the current subblock may be set to 2 (namely, a preset relevance value). TH3=X2×(1<<(BitDepth-8))×quantity of pixels included in a subblock, and X2 indicates a difference between original values of two adjacent pixels, and may be set based on a requirement. For example, X2=12. This is not limited in this application. "2" may also be replaced with another value.

If the irrelevance CompSbRelevant of the pixel in the current subblock is not less than a relevance threshold TH2 or the irrelevance CompSbRelevant of the pixel in the current subblock is not greater than an irrelevance threshold TH3, the irrelevance CompSbRelevant of the pixel in the current subblock is set to 1. "1" may also be replaced with another value.

In a possible manner, the preset mode indication information includes only the second indication information. In this way, setting the preset mode indication information of the current subblock to the first preset information may include: setting the second indication information of the current subblock to the first preset value.

S204: Perform DP prediction, to determine a predicted value of the current subblock.

For example, DP prediction may be performed on the current subblock, to determine the predicted value of the current subblock.

In a possible manner, a process of performing DP prediction on the current subblock, to determine the predicted value of the current subblock may include: calculating the average value of the original values of all the pixels in the current subblock, and using the average value as the predicted value (which may also be referred to as a predicted difference value) of the current subblock.

In a possible manner, a process of performing DP prediction on the current subblock, to determine the predicted value of the current subblock may include: using an original value of any pixel in the current subblock as the predicted value (which may also be referred to as a predicted difference value) of the current subblock.

It should be understood that a manner of determining a predicted value through DP prediction is not limited in this application.

It should be noted that an execution sequence of S203 and S204 is not limited in this application.

S205: Determine a predicted residual between the predicted value of the current subblock and the current subblock.

For example, a difference between the predicted value of the current subblock and the current subblock may be calculated, to obtain the predicted residual of the current subblock.

S206: Determine a first quantization parameter based on a preset constraint manner of a first encoding code length.

The first encoding code length corresponds to the predicted residual of the current subblock.

For example, the first encoding code length may be constrained, to adjust reconstruction quality and a bit rate in real time based on a requirement and a channel state.

In a possible manner, the preset constraint manner of the first encoding code length may be performing constraining by adjusting a quantization parameter (which may be referred to as a first constraint manner). In this case, the first quantization parameter may be determined based on a target encoding bit rate of the current subblock, the bit depth of the image in which the current subblock is located, and a second encoding code length (namely, an encoding code length corresponding to the predicted value of the current subblock).

For example, the target encoding bit rate of the current subblock is 8, the bit depth of the image in which the current subblock is located is 8, and the second encoding code length is 8. In this case, the first quantization parameter may be set to 3.

In a possible manner, when the second encoding code length is equal to the bit depth of the image in which the current subblock is located, only the bit depth of the image in which the current subblock is located and the target encoding bit rate of the current subblock may be written into the bitstream. In this way, in a decoding process, the bit depth of the image in which the current subblock is located may be used as the second encoding code length, so that the decoder determines the first quantization parameter.

In a possible manner, when the second encoding code length is not equal to the bit depth of the image in which the current subblock is located, the second encoding code length, the bit depth of the image in which the current subblock is located, and the target encoding bit rate of the current subblock may be written into the bitstream, so that the decoder determines the first quantization parameter.

S207: Quantize the predicted residual of the current subblock based on the first quantization parameter.

For example, for the current subblock, when it is determined that the DP prediction mode is to be used to replace the intra prediction mode corresponding to the CU, the predicted residual of the current subblock may be quantized based on the first quantization parameter.

S208: Perform entropy encoding on the quantized predicted residual of the current subblock, to obtain the bitstream of the current subblock.

Then, entropy encoding may be performed on the quantized predicted residual of the current subblock, to obtain the bitstream of the current subblock.

S209: Set preset mode indication information of the current subblock to second preset information.

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The second preset information includes a third preset value and a fourth preset value, and setting the preset mode indication information of the current subblock to the second preset information includes: setting the second indication information to the third preset value, where the second indication information set to the third preset value indicates that the prediction mode of the current subblock is the intra prediction mode corresponding to the CU; and setting the first indication information to the fourth preset value, where the first indication information set to the fourth preset value indicates that the CU does not include a subblock whose prediction mode is the DP prediction mode. For details, refer to the foregoing descriptions. Details are not described herein again.

In a possible manner, the preset mode indication information includes first indication information and second indication information, the first indication information indicates whether the CU includes a subblock whose prediction mode is the DP prediction mode, and the second indication information indicates whether a prediction mode of the subblock is the DP prediction mode. The second preset information includes a third preset value and a fourth preset value, and setting the preset mode indication information of the current subblock to the second preset information includes: setting the second indication information to the third preset value, where the second indication information set to the third preset value indicates that the prediction mode of the current subblock is the intra prediction mode corresponding to the CU; determining irrelevance between pixels in the current subblock; and setting the first indication information to the fourth preset value when the second indication information is the third preset value and/or the irrelevance between the pixels in the current subblock does not meet a preset irrelevance condition, where the first indication information set to the fourth preset value indicates that the CU does not include a subblock whose prediction mode is the DP prediction mode.

In a possible manner, the preset mode indication information includes only the second indication information. In this way, setting the preset mode indication information of the current subblock to the second preset information may include: setting the second indication information of the current subblock to the third preset value.

The third preset value and the fourth preset value may be set based on a requirement. This is not limited in this application. It should be noted that the third preset value is different from the first preset value. For example, if the first preset value is 1, the third preset value may be 0. The fourth preset value is different from the second preset value. For example, if the second preset value is 1, the fourth preset value may be 0.

In this way, when intra prediction is performed on all subblocks included in the entire CU based on the intra prediction mode corresponding to the CU, if the preset mode indication information includes only the second indication information, second indication information of each subblock needs to be written into the bitstream; or if the preset mode indication information includes the first indication information and the second indication information, only the first indication information of the CU needs to be written into the bitstream. That is, compared with a case in which the preset mode indication information is the second indication information, when the preset mode indication information includes the first indication information and the second indication information, a quantity of bits occupied by the preset mode indication information in the bitstream may be reduced, and bitstream overheads may be reduced.

S210: Perform intra prediction corresponding to the CU, to determine a predicted value of the current subblock.

For example, intra prediction corresponding to the CU is performed on the current subblock based on the intra prediction mode corresponding to the CU, to determine the predicted value of the current subblock.

It should be noted that an execution sequence of S209 and S210 is not limited in this application.

S211: Determine a predicted residual between the predicted value of the current subblock and the current subblock.

S212: Quantize the predicted residual of the current subblock based on a second quantization parameter corresponding to the CU.

For example, the second quantization parameter corresponding to the CU may be determined based on complexity information of the current CU and a quantity of encoded bits of a previous CU; and then the predicted residual between the predicted value of the current subblock and the current subblock is quantized based on the second quantization parameter.

In a possible manner, the complexity information of the current CU to which the current subblock belongs may be a complexity level. For example, the complexity level of the current CU may be determined based on a texture complexity level of the current CU and an IBC complexity level of the current CU. For example, a smallest value in the texture complexity level of the current CU and the IBC complexity level of the current CU may be determined as the complexity level of the current CU.

S213: Perform entropy encoding on a quantized predicted residual of the current subblock, to obtain the bitstream of the current subblock.

For example, entropy encoding may be performed on the quantized prediction residual, to obtain the bitstream of a current subblock.

S214: Write the first encoding code length and the preset mode indication information into the bit stream.

For example, the preset mode indication information is added to the bitstream as a new syntax element, so that the decoder learns of the prediction mode of the current subblock.

For example, the first encoding code length is written into the bitstream regardless of whether the DP prediction mode is to be used to replace the intra prediction mode corresponding to the CU.

For example, when the predicted value of the current subblock is determined through DP prediction, because the predicted value of the current subblock is determined based on the original value of the pixel in the current subblock, the predicted value of the current subblock (namely, the predicted difference value) may be written into the bitstream.

For example, when the predicted value of the current subblock is determined based on the intra prediction corresponding to the CU, the predicted value of the current subblock may not need to be written into the bitstream.

For example, bitstreams of the plurality of subblocks included in the CU may be cascaded to obtain a bitstream of the CU.

Optionally, for the current subblock, when it is determined that the DP prediction mode is to be used to replace the intra prediction mode corresponding to the CU, before the predicted residual of the current subblock is quantized (that is, before S207 is performed), the predicted residual of the current subblock may be truncated.

For example, a truncation range of the predicted residual may be set based on the target encoding bit rate of the current subblock, the bit depth of the image in which the current subblock is located, and the second encoding code length corresponding to the predicted value of the current subblock. The truncation range of the predicted residual is (X4, X3), X3 is a predicted residual upper limit, X4 is a predicted residual lower limit, and X3 is greater than or equal to X4. Then, the predicted residual of the current subblock is truncated based on the truncation range.

For example, a process of truncating the predicted residual of the current subblock based on the truncation range may be as follows: For each pixel in the current subblock, if a predicted residual of the pixel is greater than the predicted residual upper limit X3, the predicted residual of the pixel is set to X3; or if a predicted residual of the pixel is less than the predicted residual lower limit X4, the predicted residual of the pixel is set to X4; or if a predicted residual of the pixel is between X4 and X3, a predicted residual of the pixel is not adjusted.

For example, when the predicted residual is truncated, in a possible manner, the preset constraint manner of the first encoding code length of the predicted residual may be performing constraining by adjusting the truncation range of the predicted residual (which may be referred to as a second constraint manner). For example, the predicted residual lower limit X4 is set to -15, and the predicted residual upper limit X3 is set to 16. In this case, the second quantization parameter corresponding to the CU may be used as the first quantization parameter.

For example, when the predicted residual is truncated, in a possible manner, the preset constraint manner of the first encoding code length of the predicted residual may be performing constraining by adjusting the quantization parameter and adjusting the truncation range of the predicted residual (which may be referred to as a third constraint manner). In this case, the first quantization parameter of the current subblock may be set based on the truncation range of the predicted residual and the bit depth of the image in which the current subblock is located. For example, the predicted residual lower limit X4 is set to -3, the predicted residual upper limit X3 is set to 4, and the first quantization parameter is set to 0.

For example, when the prediction mode corresponding to the CU is the IBC mode, the preset mode indication information may be a block vector (Block Vector, BV). In this way, bit rate overheads can be reduced. In this case, a BV set to the first preset information indicates that the prediction mode of the current subblock is the difference prediction mode; a BV set to the second preset information indicates that the prediction mode of the current subblock is the IBC mode, the second preset information is a vector absolute value offset value between the current subblock and a reference block, and the reference block is determined through IBC prediction.

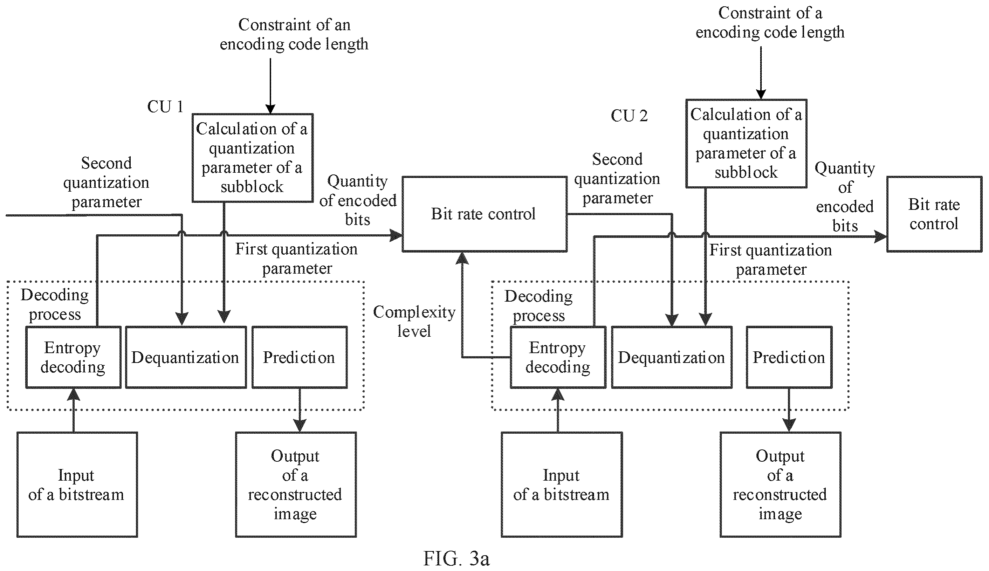

FIG. 3a is a diagram of an example decoding procedure.

As shown in FIG. 3a, for example, after a bitstream of a CU 1 is input into a decoder, the decoder may sequentially perform operations such as entropy decoding, dequantization, and prediction, to output a reconstructed image of the CU 1. Then, after a bitstream of a CU 2 is input into a decoder, the decoder may sequentially perform operations such as entropy decoding, dequantization, and prediction, to output a reconstructed image of the CU 2. By analogy, after decoding of all CUs of a same image is completed, reconstructed images of all the CUs may be stitched to obtain a complete image.

In a process of performing decoding for each subblock in the CU, when a prediction mode of the subblock is a DP prediction mode, a first quantization parameter may be determined based on a constraint condition of a decoding code length (a decoding code length of a predicted residual of the subblock); and then dequantization is performed based on the first quantization parameter. When the prediction mode of the subblock is an intra prediction mode corresponding to the CU, bit rate control may be first performed based on a complexity level (for example, a complexity level) of a current CU and a quantity of decoded bits of a previous CU (that is, an output bit rate is adjusted by changing a decoding quantization parameter, a decoding mode, and the like through analysis of the quantity of decoded bits of the previous CU and the complexity level of the current CU) that are obtained from a bitstream through entropy decoding, to obtain a second quantization parameter. Then, dequantization may be performed based on the second quantization parameter determined through bit rate control.

In a process of performing decoding for the CU 1, for a subblock whose prediction mode is an intra prediction mode corresponding to the CU 1, the second quantization parameter is a preset quantization parameter.

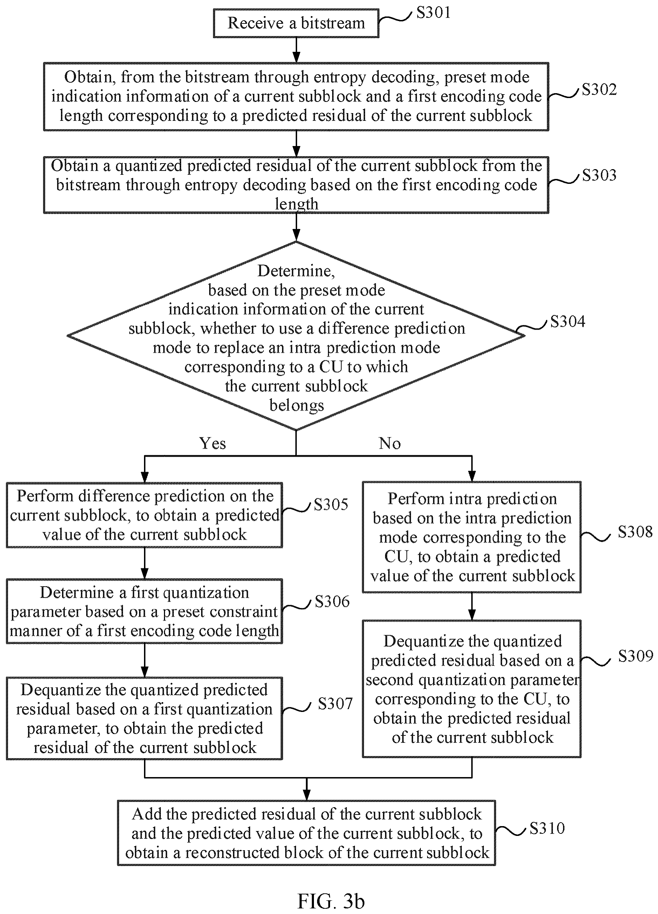

FIG. 3b is a diagram of an example decoding process.

S301: Receive a bitstream.

S302: Obtain, from the bitstream through entropy decoding, preset mode indication information of a current subblock and a first encoding code length corresponding to a predicted residual of the current subblock.

S303: Obtain a quantized predicted residual of the current subblock from the bitstream through entropy decoding based on the first encoding code length.

S304: For the current subblock, determine, based on the preset mode indication information of the current subblock, whether to use a difference prediction mode to replace an intra prediction mode corresponding to a CU to which the current subblock belongs.

For example, whether the preset mode indication information of the current subblock is first preset information may be determined, to determine, for the current subblock based on the preset mode indication information of the current subblock, whether to use the difference prediction mode to replace the intra prediction mode corresponding to the CU. When the preset mode indication information of the current subblock is the first preset information, for the current subblock, it may be determined that the difference prediction mode is to be used to replace the intra prediction mode corresponding to the CU. That is, a prediction mode of the current subblock is the DP prediction mode. In this case, S305 may be performed. When the preset mode indication information of the current subblock is not the first preset information, that is, when the preset mode indication information of the current subblock is second preset information, for the current subblock, it may be determined that the difference prediction mode is not to be used to replace the intra prediction mode corresponding to the CU. That is, a prediction mode of the current subblock is the intra prediction mode corresponding to the CU to which the current subblock belongs. In this case, S308 may be performed.

S305: Perform DP prediction on the current subblock, to obtain a predicted value of the current subblock.

For example, a predicted difference value may be further obtained from the bitstream through entropy decoding, and the predicted difference value may be used as the predicted value of the current subblock.

S306: Determine a first quantization parameter based on a preset constraint manner of a first encoding code length.

For example, a decoder may obtain, from the bitstream through entropy decoding, a target encoding bit rate of the current subblock, a bit depth of an image to which the current subblock belongs, and a second encoding code length corresponding to the predicted value of the current subblock. When the preset constraint manner of the first encoding code length is a first constraint manner, the first quantization parameter may be determined based on the target encoding bit rate of the current subblock, the bit depth of the image in which the current subblock is located, and the second encoding code length.

For example, the decoder may obtain, from the bitstream through entropy decoding, the target encoding bit rate of the current subblock and the bit depth of the image to which the current subblock belongs. In this case, the bit depth of the image to which the current subblock belongs may be used as the second encoding code length corresponding to the predicted value of the current subblock. When the preset constraint manner of the first encoding code length is the first constraint manner, the first quantization parameter may be determined based on the target encoding bit rate of the current subblock, the bit depth of the image in which the current subblock is located, and the second encoding code length.

For example, the target encoding bit rate of the current subblock is 8, the bit depth of the image in which the current subblock is located is 8, and the second encoding code length is 8. In this case, the first quantization parameter may be 3.

For example, when an encoder truncates the predicted residual of the current subblock, if the preset constraint manner of the first encoding code length is the second constraint manner, a second quantization parameter corresponding to the CU may be used as the first quantization parameter. If the preset constraint manner of the first encoding code length is a third constraint manner, a truncation range of the predicted residual may be determined based on the target encoding bit rate of the current subblock, the bit depth of the image in which the current subblock is located, and the second encoding code length corresponding to the predicted value of the current subblock; and then the first quantization parameter is determined based on the truncation range of the predicted residual and the bit depth of the image in which the current subblock is located.

S307: Dequantize the quantized predicted residual based on the first quantization parameter, to obtain the predicted residual of the current subblock.

S308: Perform intra prediction based on the intra prediction mode corresponding to the CU, to obtain a predicted value of the current subblock.

For example, for the current subblock, when it is determined that the DP prediction mode is not to be used to replace the intra prediction mode corresponding to the CU, intra prediction may be performed based on the intra prediction mode corresponding to the coding unit CU to which the current subblock belongs, to obtain the predicted value of the current subblock.

S309: Dequantize the quantized predicted residual based on a second quantization parameter corresponding to the CU, to obtain the predicted residual of the current subblock.

For a generation manner of the second quantization parameter, refer to the descriptions in the foregoing embodiments. Details are not described herein again.

S310: Add the predicted residual of the current subblock and the predicted value of the current subblock, to obtain a reconstructed block of the current subblock.

For example, when the encoder truncates the predicted residual of the current subblock, the predicted residual of the current subblock in S310 is essentially a truncated predicted residual (it should be understood that a truncated predicted residual determined by the decoder is different from the truncated predicted residual determined by the encoder).

For example, when the encoder truncates the predicted residual of the current subblock, the predicted residual of the current subblock in S310 is essentially an untruncated predicted residual (it should be understood that an untruncated predicted residual determined by the decoder is different from the untruncated predicted residual determined by the encoder).

For example, reconstructed blocks of a plurality of subblocks included in the CU may be stitched to obtain a reconstruction image of the CU.

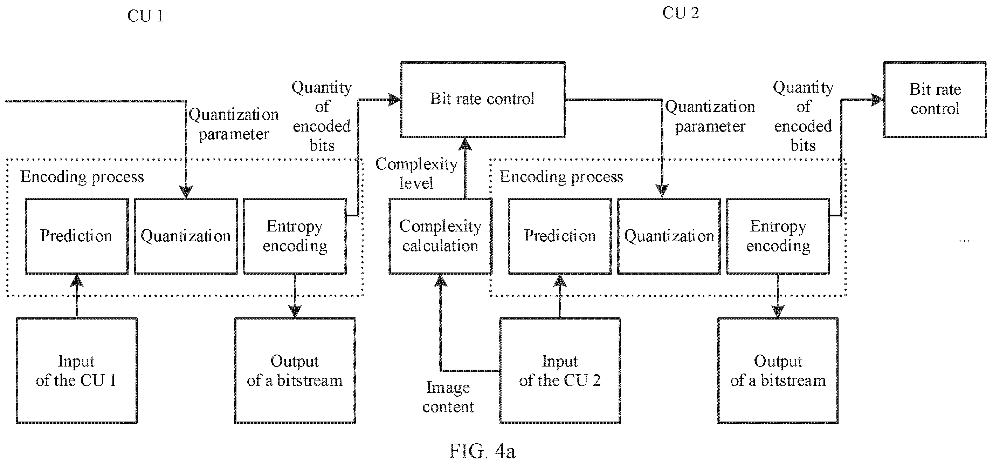

FIG. 4a is a diagram of an example encoding procedure.

As shown in FIG. 4a, for example, after a to-be-encoded image is input to an encoder, the encoder may divide the to-be-encoded image into a plurality of coding units (Coding Unit, CU) such as a CU 1, CU 2, .... Then, a bitstream of the CU 1 may be obtained by sequentially performing prediction, quantization, and entropy encoding operations on the CU 1; and a bitstream of the CU 2 may be obtained by sequentially performing prediction, quantization, and entropy encoding operations on the CU 2. By analogy, after encoding of all the CUs of the to-be-encoded image is completed, bitstreams of all the CUs are cascaded to obtain a bitstream of the to-be-encoded image.

In a process of encoding the CU 1, quantization may be performed based on a preset quantization parameter. In a process of encoding a subsequent another CU, complexity information (for example, a complexity level) of a current CU may be first determined based on image content of the current CU. Then, bit rate control is performed based on a quantity of encoded bits of a previous CU and the complexity level of the current CU (that is, an output bit rate is adjusted by changing an encoding quantization parameter, an encoding mode, and the like through analysis of the quantity of encoded bits of the previous CU and the complexity level of the current CU), to obtain a quantization parameter. Then, a quantization module may perform quantization based on the quantization parameter determined through bit rate control. The encoder may further write the complexity information of the CU into the bitstream of the CU, so that the decoder obtains the complexity information of the CU from the bitstream, to determine a quantization parameter required for dequantization.

The following describes an encoding process by using, as an example, a CU whose prediction mode is an IBC mode.

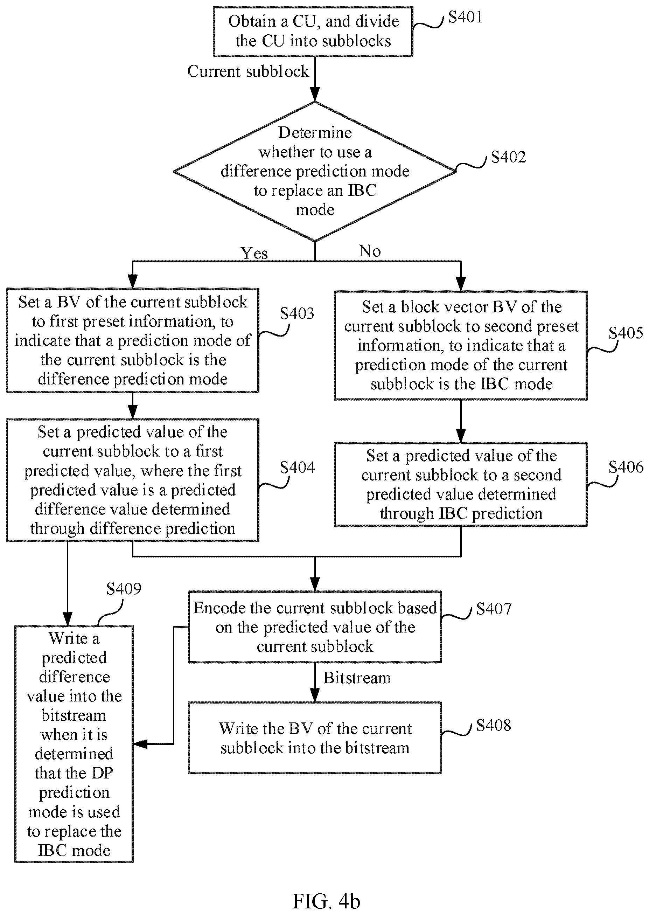

FIG. 4b is a diagram of an example encoding process.

S401: Obtain a coding unit CU, and divide the CU into a plurality of subblocks, where a prediction mode of the CU is an IBC mode.

For example, for a CU whose prediction mode is the IBC mode, an encoder may divide the CU into a plurality of subblocks. A quantity of subblocks and a size of the subblock are not limited in this application. For example, a decoder may divide the CU into a plurality of subblocks of a same size.

The following provides descriptions by using one subblock as an example.

S402: For a current subblock, determine whether to use a DP prediction mode to replace the IBC mode.

For example, for the current subblock, whether intra prediction is still performed in the IBC mode, or intra prediction is performed in the DP prediction mode may be determined. That is, whether to use the DP prediction mode to replace the IBC mode is determined.

In a possible manner, S402 may include S4021 and S4022:
S4021: Determine flatness of the current subblock.

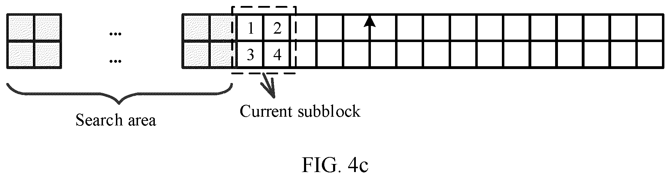

In a possible manner, differences between original values of all non-upper left corner pixels in the current subblock and an original value of an upper left corner pixel may be calculated, to obtain a plurality of differences; and absolute values of the plurality of differences are added, to obtain first intermediate information. For example, in FIG. 4c, the upper left corner pixel in the current subblock is "1" and the non-upper left corner pixels are "2", "3", and "4".

In a possible manner, differences between an original value of each pixel in the current subblock and an average value of original values of all the pixels in the current subblock may be calculated, to obtain a plurality of differences; and absolute values of the plurality of differences are added, to obtain first intermediate information.

For example, when the first intermediate information is less than a flatness threshold TH4, the flatness of the current subblock may be set to 0; or when the first intermediate information is not less than a flatness threshold TH4, the flatness of the current subblock is set to 2. TH4=X6×(1<<(BitDepth-8))×quantity of pixels included in a subblock. X6 represents a difference between original values of two adjacent pixels, and X6 may be set based on a requirement. For example, X6=2.

S4022: Determine, based on the flatness of the current subblock and second preset information, whether to use the DP prediction mode to replace the IBC mode.

For example, IBC prediction may be performed on the current subblock, to determine a reference block; and a sum of absolute differences between the current subblock and the reference block is calculated, to obtain SDA_IBC.

For example, IBC prediction is as follows: searching, by using a left area of the current subblock as a search area, the search area for a reference block matching the current subblock; and determining the predicted value of the current subblock based on a reconstructed value of the reference block matching the current subblock. For example, the reconstructed value of the reference block matching the current subblock may be used as the predicted value of the current subblock.

As shown in FIG. 4c, for example, a size of each subblock is 2*2, a gray subblock is an encoded subblock, a white subblock is a non-encoded subblock, and a subblock in a dashed box is the current subblock. The left area of the current subblock may be used as the search area.

For example, the search area may include n candidate reference blocks (n may be set based on a requirement, and this is not limited in this application). A vector absolute value offset value between a 1^{st} candidate reference block and the current subblock may be set to X1 (the 1^{st} candidate reference block may be referred to as a candidate reference block corresponding to X1). A vector absolute value offset value between a 2^{nd} candidate reference block and the current subblock may be set to X2 (the 2^{nd} candidate reference block may be referred to as a candidate reference block corresponding to X2). By analogy, a vector absolute value offset value between an n^{th} candidate reference block and the current subblock may be set to Xn (the n^{th} candidate reference block may be referred to as a candidate reference block corresponding to Xn). It should be understood that n values of X1 to Xn may be set based on a requirement, and X1 to Xn are different. For example, X1=1, X2=2, ..., and Xn=n.

For example, a sum of absolute differences between the candidate reference block corresponding to X1 and the current subblock may be calculated, to obtain SDA_X1; a sum of absolute differences between the candidate reference block corresponding to X2 and the current subblock is calculated, to obtain SDA_X2; ...; and a sum of absolute differences between the candidate reference block corresponding to Xn and the current subblock is calculated, to obtain SDA_Xn. Then, second preset information may be selected from a range of X1 to Xn based on SDA_X1, SDA_X2, ..., and SDA_Xn. Specifically, SDA_X1, SDA_X2, ..., and SDA_Xn may be compared, and a candidate reference block with a smallest sum of absolute differences is selected as a reference block. If SDA_Xm of an m^{th} (m∈[1, n], and m is an integer) candidate reference block is the smallest, Xm is selected from the range of X1 to Xn as second preset information. That is, second preset information=Xm.

For example, whether the second preset information is greater than a threshold and whether the flatness of the current subblock is equal to 0 are determined. When the second preset information is greater than the threshold and the flatness of the current subblock is equal to 0, for the current subblock, it is determined that the DP prediction mode is to be used to replace the IBC mode. If the second preset information is less than or equal to the threshold and/or the flatness of the current subblock is not equal to 0, for the current subblock, it is determined that the DP prediction mode is not to be used to replace the IBC mode.

The threshold may be a predicted residual upper limit of a subblock in a case of IBC prediction, and may be TH5. TH5=X7×(1<<(BitDepth-8))×quantity of pixels included in a subblock. X7 indicates a distance upper limit between a predicted value and an original value of each pixel in the subblock; and may be specifically set based on a requirement. This is not limited in this application.

For example, for the current subblock, S403 may be performed when it is determined that the DP prediction mode is to be used to replace the IBC mode; or for the current subblock, S405 may be performed when it is determined that the DP prediction mode is not to be used to replace the IBC mode.

S403: Set a BV of the current subblock to first preset information.

For example, for the current subblock, when it is determined that the DP prediction mode is to be used to replace the IBC mode, the BV of the current subblock may be set to the first preset information. In this case, the BV set to the first preset information may indicate that a prediction mode of the current subblock is the DP prediction mode.

S404: Set the predicted value of the current subblock to a first predicted value.

For example, for the current subblock, when it is determined that the DP prediction mode is to be used to replace the IBC mode, DP prediction may be performed on the current subblock, to obtain the first predicted value (which may also be referred to as a predicted difference value). For details, refer to the foregoing descriptions. Details are not described herein again.

It should be noted that an execution sequence of S403 and S404 is not limited in this application.

S405: Set a block vector BV of the current subblock to second preset information.

For example, for the current subblock, when it is determined that the DP prediction mode is not to be used to replace the IBC mode, a vector absolute value offset value (which may be represented by using the second preset information) between the current subblock and the reference block may be used as the BV of the current subblock. The reference block is determined by performing IBC prediction on the current subblock. In this case, the BV set to the second preset information may indicate that the prediction mode of the current subblock is the IBC mode.

The second preset information may be obtained by calculating an absolute value of a difference between horizontal coordinates of the current subblock and horizontal coordinates of the reference block.

S406: Set the predicted value of the current subblock to a second predicted value.

For example, for the current subblock, when it is determined that the DP prediction mode is not to be used to replace the IBC mode, the predicted value of the current subblock may be set to the second predicted value. In a process of S402, a candidate reference block with a smallest sum of absolute differences is selected from SDA_X1, SDA_X2, ..., and SDA_Xn as a reference block. Then, the reconstructed value of the reference block may be determined as the second predicted value.

It should be noted that the second preset information and the first preset information are different.

It should be noted that an execution sequence of S405 and S406 is not limited in this application.

S407: Encode the current subblock based on the predicted value of the current subblock, to obtain a bitstream of the current subblock.

For example, a predicted residual between the predicted value of the current subblock and the current subblock may be calculated; the predicted residual may be quantized based on a quantization parameter; and entropy encoding may be performed on the quantized predicted residual, to obtain the bitstream of the current subblock.

S408: Write the BV of the current subblock into the bitstream.

S409: Write the predicted difference value into the bit stream when it is determined that the DP prediction mode is used to replace the IBC mode.

For example, the BV of the current subblock may be written into the bitstream, so that the decoder can determine the prediction mode of the current subblock.

For example, when the predicted value of the current subblock is determined through DP prediction, because the predicted value of the current subblock is determined based on the original value of the pixel in the current subblock, the predicted value of the current subblock (namely, the predicted difference value) may be written into the bitstream.

For example, when the predicted value of the current subblock is determined based on the intra prediction corresponding to the CU, the predicted value of the current subblock may not need to be written into the bitstream.

For example, bitstreams of the plurality of subblocks included in the CU may be cascaded to obtain a bitstream of the CU.

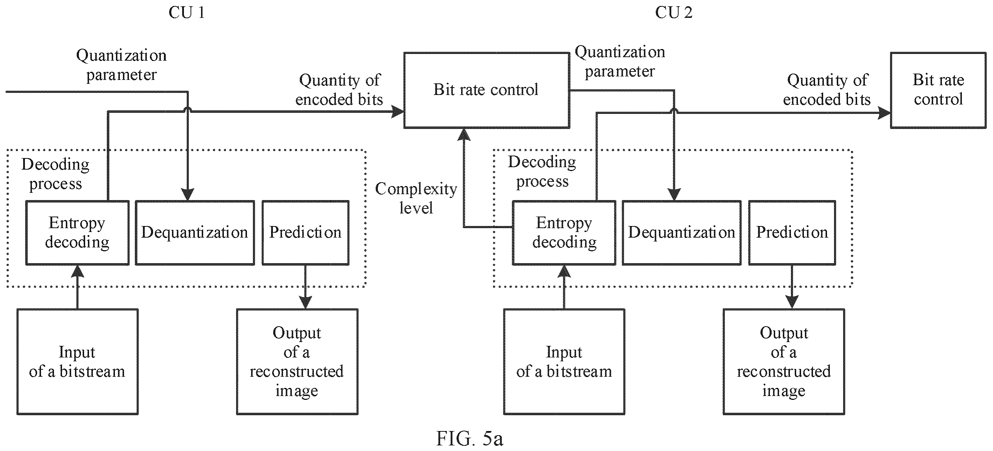

FIG. 5a is a diagram of an example decoding procedure.

As shown in FIG. 5a, for example, after a bitstream of a CU 1 is input into a decoder, the decoder may sequentially perform operations such as entropy decoding, dequantization, and prediction, to output a reconstructed image of the CU 1. Then, after a bitstream of a CU 2 is input into the decoder, the decoder may sequentially perform operations such as entropy decoding, dequantization, and prediction, to output a reconstructed image of the CU 2. By analogy, after decoding of all CUs of a same image is completed, reconstructed images of all the CUs may be stitched to obtain a complete image.

In a process of decoding the CU 1, dequantization may be performed based on a preset quantization parameter. In a process of decoding a subsequent another CU, bit rate control may be performed based on complexity information (for example, a complexity level) obtained from a bitstream of a current CU and a quantity of encoded bits of a previous CU through entropy decoding, to determine the quantization parameter; and then, a dequantization module may perform dequantization based on the quantization parameter determined through bit rate control.

The following describes a decoding process by using, as an example, a subblock of a CU whose prediction mode is an IBC mode.

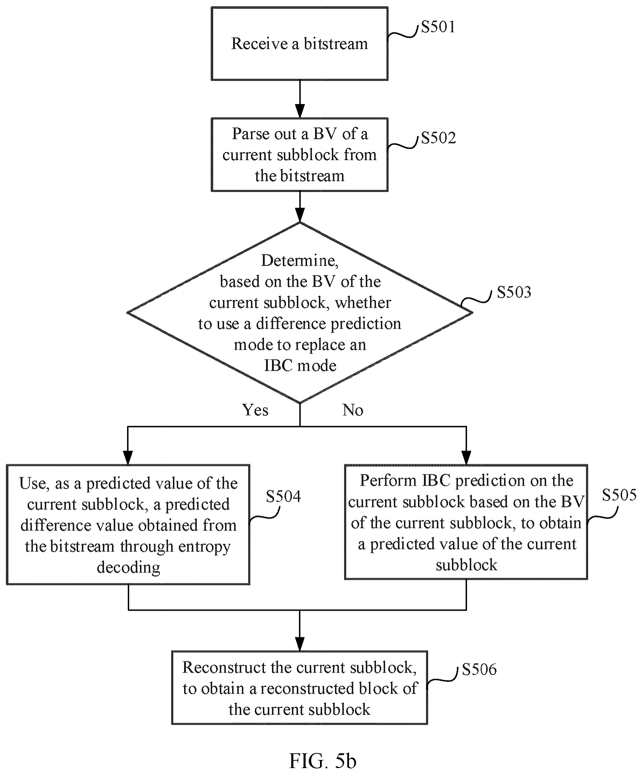

FIG. 5b is a diagram of an example decoding process. A decoding process in FIG. 5b corresponds to the encoding process in FIG. 4b.

S501: Receive a bitstream.

S502: Parse out a BV of a current subblock from the bitstream, where an intra prediction mode of a coding unit CU to which the current subblock belongs is an intra block copy IBC mode.

For example, an encoder writes the BV of the current subblock into the bitstream. Further, after receiving the bitstream, a decoder may parse out (namely, entropy decoding) the BV of the current subblock from the bitstream.

S503: For the current subblock, determine, based on the BV of the current subblock, whether to use a difference prediction mode to replace the IBC mode.

For example, the encoder nests the DP encoding mode into the IBC mode. After parsing out the BV of the current subblock from the bitstream, the decoder may determine, based on the BV of the current subblock, whether a prediction mode of the current subblock is the IBC mode or the DP prediction mode. That is, for the current subblock, whether to use DP prediction to replace IBC prediction is determined.

For example, whether the BV of the current subblock is first preset information may be determined, to determine, for the current subblock, whether to use DP prediction to replace IBC prediction. If the BV of the current subblock is the first preset information, it may be determined that the prediction mode of the current subblock is the DP prediction mode. That is, for the current subblock, it is determined that DP prediction is to be used to replace IBC prediction. If the BV of the current subblock is not the first preset information, it may be determined that the BV of the current subblock is second preset information. In this case, it may be determined that the prediction mode of the current subblock is the IBC mode. That is, for the current subblock, it is determined that DP prediction is not used to replace IBC prediction.

S504: Use, as a predicted value of the current subblock, a predicted difference value obtained from the bit stream through entropy decoding.

For example, if the BV of the current subblock is the first preset information, DP prediction may be performed on the current subblock, to obtain the predicted value of the current subblock. Specifically, the predicted difference value may be further obtained from the bitstream through entropy decoding, and the predicted difference value may be used as the predicted value of the current subblock.

S505: Perform IBC prediction on the current subblock based on the BV of the current subblock, to obtain the predicted value of the current subblock.

For example, if the BV of the current subblock is the second preset information, IBC prediction may be performed on the current subblock based on the second preset information, to obtain the predicted value of the current subblock.

For example, a reference block of the current subblock may be determined from a decoded subblock based on location coordinates of the current subblock and the second preset information. A reconstructed value of the reference block of the current subblock is used as the predicted value of the current subblock.

S506: Reconstruct the current subblock based on the predicted value of the current subblock, to obtain a reconstructed block of the current subblock.

For example, after receiving the bitstream, the decoder may further parse out (namely, entropy decoding) a quantized predicted residual from the bitstream; and then dequantize the quantized predicted residual, to obtain a predicted residual of the current subblock. Then, the predicted value of the current subblock and the predicted residual of the current subblock may be added, to obtain the reconstructed block of the current subblock.

For example, reconstructed blocks of a plurality of subblocks included in the CU may be stitched to obtain a reconstruction image of the CU.

Therefore, encoding and decoding are performed in the encoding method in the embodiment in FIG. 4b and the decoding method in FIG. 5b, neither a bit rate nor a search area is increased. In addition, coding unit prediction flexibility can be further increased, prediction at a finer granularity is implemented, prediction accuracy is improved, and compression efficiency is improved.

It should be understood that, when a prediction mode of the CU is the IBC mode, in a process of encoding and decoding a subblock whose prediction mode is the DP prediction mode in the CU, a first quantization parameter may be determined in a manner in the foregoing embodiments; and then quantization or dequantization is performed based on the first quantization parameter. A manner of determining a quantization parameter in an encoding and decoding process when the prediction mode of the CU is the IBC mode is not limited in this application.

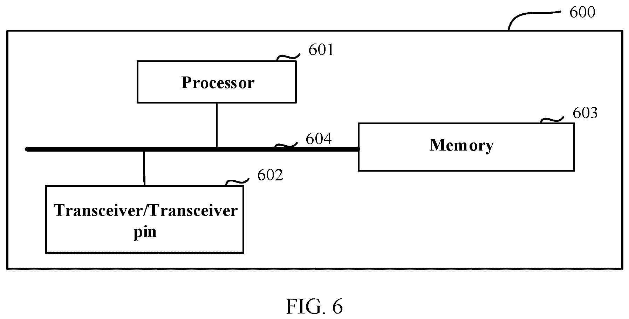

In an example, FIG. 6 is a block diagram of an apparatus 600 according to an embodiment of this application. The apparatus 600 may include a processor 601 and a transceiver/transceiver pin 602, and optionally further includes a memory 603.

Components of the apparatus 600 are coupled together through a bus 604. In addition to a data bus, the bus 604 further includes a power bus, a control bus, and a status signal bus. However, for clear description, various buses are referred to as the bus 604 in the figure.

Optionally, the memory 603 may be configured to store instructions in the foregoing method embodiments. The processor 601 may be configured to: execute the instructions in the memory 603, control a receive pin to receive a signal, and control a transmit pin to send a signal.

The apparatus 600 may be the electronic device or a chip of the electronic device in the foregoing method embodiments.

For example, the electronic device may be a terminal device or a server.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, the electronic device is enabled to perform the foregoing related method steps to implement the encoding and decoding methods in the foregoing embodiments. The interface circuit is a transceiver/transceiver pin 602.

An embodiment further provides a computer-readable storage medium. The computer-readable storage medium stores computer instructions, and when the computer instructions are run on an electronic device, the electronic device is enabled to perform the foregoing related method steps to implement the encoding and decoding methods in the foregoing embodiments.

An embodiment further provides a computer program product. The computer program product includes computer instructions, and when the computer instructions are executed by a computer or a processor, the computer is enabled to perform the foregoing related steps to implement the encoding and decoding methods in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, so that the chip performs the encoding and decoding methods in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A decoding method, wherein the method comprises:
receiving a bitstream, and obtaining, from the bitstream through entropy decoding, preset mode indication information of a current subblock and a first encoding code length corresponding to a predicted residual of the current subblock;
obtaining a quantized predicted residual of the current subblock from the bitstream through entropy decoding based on the first encoding code length;
for the current subblock, determining, based on the preset mode indication information of the current subblock, whether to use a difference prediction mode to replace an intra prediction mode corresponding to a coding unit CU to which the current subblock belongs;
if it is determined that the difference prediction mode is to be used to replace the intra prediction mode corresponding to the coding unit CU to which the current subblock belongs, performing difference prediction on the current subblock, to obtain a predicted value of the current subblock; determining a first quantization parameter based on a preset constraint manner of the first encoding code length; and dequantizing the quantized predicted residual based on the first quantization parameter, to obtain the predicted residual of the current subblock; or
if it is determined that the difference prediction mode is not to be used to replace the intra prediction mode corresponding to the coding unit CU to which the current subblock belongs, performing intra prediction based on the intra prediction mode corresponding to the CU, to obtain a predicted value of the current subblock; and dequantizing the quantized predicted residual based on a second quantization parameter corresponding to the CU, to obtain the predicted residual of the current subblock; and
adding the predicted residual of the current subblock and the predicted value of the current subblock, to obtain a reconstructed block of the current subblock.

2. The method according to claim 1, wherein determining the first quantization parameter based on the preset constraint manner of the first encoding code length comprises:
when the preset constraint manner is a first constraint manner, determining the first quantization parameter based on a target encoding bit rate of the current subblock, a bit depth of an image to which the current subblock belongs, and a second encoding code length corresponding to the predicted value of the current subblock that are obtained from the bitstream through entropy decoding; or
using the second quantization parameter as the first quantization parameter when the preset constraint manner is a second constraint manner; or
when the preset constraint manner is a third constraint manner, determining a truncation range of the predicted residual of the current subblock, and determining the first quantization parameter based on the truncation range.

3. The method according to claim 1 or 2, wherein the preset mode indication information comprises first indication information and second indication information; and for the current subblock, determining, based on the preset mode indication information of the current subblock, whether to use the difference prediction mode to replace the intra prediction mode corresponding to the coding unit CU to which the current subblock belongs comprises:
determining, based on the first indication information, whether the CU comprises a subblock whose prediction mode is the difference prediction mode; and
when it is determined that the CU comprises a subblock whose prediction mode is the difference prediction mode, for the current subblock, determining, based on the second indication information, whether to use the difference prediction mode to replace the intra prediction mode corresponding to the CU.

4. The method according to claim 1 or 2, wherein the another intra prediction mode is an intra block copy IBC mode, and the preset mode indication information is a block vector BV.

5. An encoding method, wherein the method comprises:
obtaining a coding unit CU, and dividing the CU into a plurality of subblocks;
for a current subblock, determining whether to use a difference prediction mode to replace an intra prediction mode corresponding to the CU;
if it is determined that the difference prediction mode is to be used to replace the intra prediction mode corresponding to the CU, setting preset mode indication information of the current subblock to first preset information, and performing difference prediction, to determine a predicted value of the current subblock; determining a predicted residual between the predicted value of the current subblock and the current subblock; determining a first quantization parameter based on a preset constraint manner of a first encoding code length, wherein the first encoding code length corresponds to the predicted residual of the current subblock; quantizing the predicted residual of the current subblock based on the first quantization parameter; and performing entropy encoding on the quantized predicted residual of the current subblock, to obtain a bitstream of the current subblock; or
if it is determined that the difference prediction mode is not to be used to replace the intra prediction mode corresponding to the CU, setting preset mode indication information of the current subblock to second preset information, and performing intra prediction corresponding to the CU, to determine a predicted value of the current subblock; determining a predicted residual between the predicted value of the current subblock and the current subblock; quantizing the predicted residual of the current subblock based on a second quantization parameter corresponding to the CU; and performing entropy encoding on the quantized predicted residual of the current subblock, to obtain a bitstream of the current subblock; and
writing the preset mode indication information and the first encoding code length corresponding to the predicted residual of the current subblock into the bitstream.

6. The method according to claim 5, wherein for the current subblock, when it is determined that the difference prediction mode is to be used to replace the intra prediction mode corresponding to the CU, the method further comprises:
truncating the predicted residual of the current subblock; and
quantizing the predicted residual of the current subblock based on the first quantization parameter comprises:
quantizing a truncated predicted residual of the current subblock based on the first quantization parameter.

7. The method according to claim 6, wherein truncating the predicted residual of the current subblock comprises:
determining a truncation range based on a target encoding bit rate of the current subblock, a bit depth of an image in which the current subblock is located, and a second encoding code length corresponding to the predicted value of the current subblock; and
truncating the predicted residual of the current subblock based on the truncation range.

8. The method according to any one of claims 5 to 7, wherein determining the first quantization parameter based on the preset constraint manner of the first encoding code length comprises:
when the preset constraint manner is a first constraint manner, determining the first quantization parameter based on the target encoding bit rate of the current subblock, the bit depth of the image to which the current subblock belongs, and the second encoding code length corresponding to the predicted value of the current subblock; or
using the second quantization parameter as the first quantization parameter when the preset constraint manner is a second constraint manner; or
when the preset constraint manner is a third constraint manner, determining the first quantization parameter based on the truncation range of the predicted residual of the current subblock.

9. The method according to claim 7 or 8, wherein the method further comprises:
writing the target encoding bit rate of the current subblock, the bit depth of the image in which the current subblock is located, and the second encoding code length corresponding to the predicted value of the current subblock into the bitstream of the current subblock.

10. The method according to any one of claims 5 to 9, wherein for the current subblock, determining whether to use the difference prediction mode to replace the intra prediction mode corresponding to the CU comprises:
determining flatness of the current subblock; and
determining, based on the flatness of the current subblock, whether to use the difference prediction mode to replace the intra prediction mode corresponding to the CU.

11. The method according to claim 10, wherein determining the flatness of the current subblock comprises:
determining the flatness of the current subblock based on an original value of a pixel in the current subblock.

12. The method according to any one of claims 5 to 11, wherein the another intra prediction mode is an intra block copy IBC mode, and the preset mode indication information is a block vector BV; and
a BV set to the first preset information indicates that a prediction mode of the current subblock is the difference prediction mode, a BV set to the second preset information indicates that a prediction mode of the current subblock is the IBC mode, the second preset information is a vector absolute value offset value between the current subblock and a reference block, and the reference block is determined through the IBC prediction.

13. A decoding method, wherein the method comprises:
receiving a bitstream;
obtaining a block vector BV of a current subblock from the bitstream through entropy decoding, wherein a prediction mode of a coding unit CU to which the current subblock belongs is an intra block copy IBC mode;
for the current subblock, determining, based on the BV of the current subblock, whether to use a difference prediction mode to replace the IBC mode;
if it is determined, based on the BV of the current subblock, that the difference prediction mode is to be used to replace the IBC mode, using, as a predicted value of the current subblock, a predicted difference value obtained from the bitstream through entropy decoding; or
if it is determined that the difference prediction mode is not to be used to replace the IBC mode, performing IBC prediction on the current subblock based on the BV of the current subblock, to obtain a predicted value of the current subblock; and
reconstructing the current subblock based on the predicted value of the current subblock, to obtain a reconstructed block of the current subblock.

14. An encoding method, wherein the method comprises:
obtaining a coding unit CU, and dividing the CU into a plurality of subblocks, wherein a prediction mode of the CU is an intra block copy IBC mode;
for a current subblock, determining whether to use a difference prediction mode to replace the IBC mode;
if it is determined that the difference prediction mode is to be used to replace the IBC mode, setting a block vector BV of the current subblock to first preset information, and setting a predicted value of the current subblock to a first predicted value, wherein the BV set to the first preset information indicates that a prediction mode of the current subblock is the difference prediction mode, and the first predicted value is determined based on a predicted difference value determined through the difference prediction; or
if it is determined that the difference prediction mode is not to be used to replace the IBC mode, setting a BV of the current subblock to second preset information, and setting a predicted value of the current subblock to a second predicted value, wherein the BV set to the second preset information indicates that a prediction mode of the current subblock is the IBC mode, the second preset information is a vector absolute value offset value between the current subblock and a reference block, and the reference block and the second predicted value are determined through the IBC prediction;
encoding the current subblock based on the predicted value of the current subblock, to obtain a bitstream of the current subblock; and
writing the BV of the current subblock into the bitstream of the current subblock, and writing the predicted difference value into the bitstream when it is determined that the difference prediction mode is to be used to replace the IBC mode.

15. The method according to claim 14, wherein for the current subblock, determining whether to use the difference prediction mode to replace the IBC mode comprises:
determining flatness of the current subblock; and
for the current subblock, determining, based on the flatness of the current subblock and the second preset information, whether to use the difference prediction mode to replace the IBC mode.

16. The method according to claim 15, wherein determining the flatness of the current subblock comprises:
determining the flatness of the current subblock based on an original value of a pixel in the current subblock.

17. An electronic device, comprising:
a memory and a processor, wherein the memory is coupled to the processor; and
the memory stores program instructions, and when the program instructions are executed by the processor, the electronic device is enabled to perform the decoding method according to any one of claims 1 to 4, or perform the decoding method according to claim 13.

18. An electronic device, comprising:
a memory and a processor, wherein the memory is coupled to the processor; and
the memory stores program instructions, and when the program instructions are executed by the processor, the electronic device is enabled to perform the encoding method according to any one of claims 5 to 12, or perform the encoding method according to any one of claims 14 to 16.

19. A chip, comprising one or more interface circuits and one or more processors, wherein the one or more processors receive or send data through the one or more interface circuits, and when the one or more processors execute computer instructions, the electronic device is enabled to perform the decoding method according to any one of claims 1 to 4, or perform the decoding method according to claim 13.

20. A chip, comprising one or more interface circuits and one or more processors, wherein the one or more processors receive or send data through the one or more interface circuits, and when the one or more processors execute computer instructions, the electronic device is enabled to perform the encoding method according to any one of claims 5 to 12, or perform the encoding method according to any one of claims 14 to 16.

21. A computer-readable storage medium, wherein the computer-readable storage medium stores a computer program, and when the computer program is run on a computer or a processor, the computer or the processor is enabled to perform the method according to any one of claims 1 to 16.

22. A computer program product, wherein the computer program product comprises computer instructions, and when the computer instructions are executed by a computer or a processor, steps of the method according to any one of claims 1 to 16 are performed.

23. A bitstream storage apparatus, wherein the apparatus comprises a receiver and at least one storage medium;
the receiver is configured to receive a bitstream;
the at least one storage medium is configured to store the bitstream; and
the bitstream is generated according to the encoding method according to any one of claims 5 to 12, or the encoding method according to any one of claims 14 to 16.

24. A bitstream transmission apparatus, wherein the apparatus comprises a transmitter and at least one storage medium;
the at least one storage medium is configured to store a bitstream, and the bitstream is generated according to the encoding method according to any one of claims 5 to 12, or the encoding method according to any one of claims 14 to 16; and
the transmitter is configured to: obtain the bitstream from the storage medium, and send the bitstream to a device-side device through a transmission medium.

25. A bitstream distribution system, wherein the system comprises:
at least one storage medium, configured to store at least one bitstream, wherein the at least one bitstream is generated according to the encoding method according to any one of claims 5 to 12, or the encoding method according to any one of claims 14 to 16; and
a streaming media device, configured to: obtain a target bitstream from the at least one storage medium, and send the target bitstream to a device-side device, wherein the streaming media device comprises a content server or a content delivery server.
